# FASCICULE DE BREVET EUROPEEN

(11) **EP 3 541 496 B1**
(45) Date de publication et mention de la délivrance du brevet: **10.03.2021**
(21) Numéro de dépôt: 17804829.4
(22) Date de dépôt: 10.11.2017
(51) Int. Cl.: B01D 53/14

(54) **PROCÉDÉ D'ÉPURATION D'UN EFFLUENT GAZEUX**
VERFAHREN ZUR REINIGUNG EINES GASFÖRMIGEN ABSTROMS
PROCESS FOR PURIFYING A GASEOUS EFFLUENT

(30) Priorité: 18.11.2016 FR 1661212
(43) Date de publication de la demande: 25.09.2019
(73) Titulaire: Universite du Littoral Cote d'Opale, 59140 Dunkerque (FR); Université d'Artois, 62000 Arras (FR)
(72) Inventeur: FOURMENTIN, Sophie, 59380 Bierne (FR); LANDY, David, 59229 Teteghem (FR); CUNHA GOMES DE MOURA, Leila Miriam, 59240 Dunkerque (FR); TILLOY, Sébastien, 62136 Richebourg (FR); BRICOUT, Hervé, 59780 Baisieux (FR); FERREIRA, Michel, 62710 Courrières (FR)
(74) Mandataire: Nony
(86) Numéro de dépôt international: PCT/EP2017/078950
(87) Numéro de publication internationale: WO 2018/091379

(56) Documents cités:
- WO-A1-2016/082269
- CN-A- 104 829 563
- CN-A- 104 926 605
- CN-A- 106 474 869
- GREGORIO GARCÍA ET AL: "Deep Eutectic Solvents: Physicochemical Properties and Gas Separation Applications", ENERGY & FUELS., vol. 29, no. 4, 16 avril 2015 (2015-04-16) , pages 2616-2644, XP055333759, WASHINGTON, DC, US. ISSN: 0887-0624, DOI: 10.1021/ef5028873
- MOURA LEILA ET AL: "Deep eutectic solvents as green absorbents of volatile organic pollutants", ENVIRONMENTAL CHEMISTRY LETTERS, SPRINGER-VERLAG, HEIDELBERG, DE, vol. 15, no. 4, 24 août 2017 (2017-08-24), pages 747-753, XP036361970, ISSN: 1610-3653, DOI: 10.1007/S10311-017-0654-Y [extrait le 2017-08-24]

## Description

La présente invention concerne un procédé d'épuration d'effluents gazeux contenant des composés organiques volatils (COVs).

Les émissions mondiales de COVs proviennent, pour 90% d'entre elles, de sources naturelles (fermentations biologiques, fuites de gaz naturel) et pour 10% de sources anthropiques (issues des activités humaines).

L'impact des COVs sur l'environnement (eau, sol, et air) et sur certains individus est non négligeable.

Les COVs ont des effets néfastes sur l'Homme en général car ils peuvent provoquer des irritations cutanées, oculaires, respiratoires, des maux de tête, des troubles cardiaques, digestifs, rénaux, hépatiques et du système nerveux central. Certains COVs ont également des propriétés cancérogènes (benzène, formaldéhyde) et d'autres, comme le toluène, sont suspectés d'altérer les fonctions de reproduction.

Les COVs jouent également un rôle important dans la troposphère, conduisant à une augmentation de la quantité d'ozone dans l'air, avec ses conséquences sur l'environnement et la santé.

Les procédés de traitement des COVs proposés actuellement sont soit récupératifs (absorption, adsorption et condensation) soit destructifs (oxydation thermique, oxydation catalytique, photocatalyse, et traitement biologique).

Il est connu que les procédés d'absorption sont particulièrement avantageux, notamment en termes d'efficacité (rendement d'épuration de l'ordre de 90% à 98 %), d'étendue de gamme de concentration des COVs (effluents de concentrations de l'ordre de 2 à 50 g/Nm³ à faible ou moyen débit), et d'adaptabilité à de nombreux secteurs d'activités industriels (industrie agroalimentaire, pétrochimie, pharmacie, traitement de surface, dégraissage, peinture, encres, colles, imprimerie et impression sur emballage, textiles). De plus, l'absorption est une solution adaptée à la récupération de produits pour lesquels l'adsorption sur charbon actif ne peut être mise en œuvre (cas de certaines cétones réagissant avec le charbon actif).

L'absorption correspond au lavage de gaz par une solution liquide au cours duquel les polluants sont transférés de la phase gaz vers la phase liquide. Pour des raisons évidentes, l'affinité du polluant avec la phase liquide absorbante est donc déterminante. L'efficacité et les coûts d'investissement et de fonctionnement sont ainsi régis par le couple polluant/absorbant.

Par ailleurs, les méthodes de lavage actuelles par absorption sont généralement restreintes aux COVs hydrosolubles dans la mesure où elles emploient principalement l'eau ou des solutions aqueuses mettant en œuvre des bases, des acides ou des réactifs oxydants.

Pour ce qui est du traitement de composés organiques hydrophobes (hydrocarbures aromatiques et aliphatiques par exemple), des systèmes de lavage utilisant des solvants lourds, tels que des huiles de silicone, du polyéthylène glycol ou des adipates ont été expérimentés (Heymes et al., Chem. Eng. J., 2006, 115(3), 225-231). Toutefois, leur coût d'utilisation reste élevé et certains de ces composés ne sont pas dénués de toxicité.

Plus récemment, des études ont été réalisées en utilisant des liquides ioniques (LI) en tant que solvants de lavage (Quijano et al., Chem. Eng. Sc., 2011, 66(12), 2707-2712, et Gonzalez-Miquel et al., J. Phys. Chem. B, 2013, 117(1), 296-306). Toutefois, bien que les LI fassent preuve d'une très bonne capacité d'absorption vis-à-vis des COVs, ils présentent, outre une certaine toxicité, des inconvénients liés à leur synthèse (étapes de purification nécessaires). En effet, par exemple, les LI possédant des contre-ions BF₄ ou PF₆ ne sont pas stables et peuvent libérer des sous-produits toxiques tels que HF et POF₃ en présence d'humidité, ce qui empêche toute application de ces composés (Freire et al., J. Phys. Chem. A 2010, 114, 3744-3749 et Swatloski et al., Green Chemistry, 2003, 5, 361-363).

Cependant, malgré ses nombreux avantages, l'absorption demeure peu utilisée de par l'absence de solvants de lavage versatiles et de faible coût.

Il existe donc un intérêt tout particulier de disposer d'un procédé pour éliminer les COVs des effluents gazeux *via* l'absorption dénué des inconvénients précités.

Ainsi, l'un des objectifs de l'invention est de proposer un procédé d'épuration d'effluents gazeux contenant des COVs, permettant d'utiliser des solvants de lavage peu coûteux, non toxiques, disponibles, inertes chimiquement et biodégradables.

Un autre objectif de l'invention est de disposer d'un procédé d'épuration d'effluents gazeux contenant des COVs, mettant en oeuvre des composés efficaces en tant que solvants de lavage vis-à-vis à la fois des COVs hydrophiles et des COVs hydrophobes.

Un autre objectif de l'invention est de fournir un procédé d'épuration d'effluents gazeux contenant des COVs, employant des solvants de lavage aisément recyclables et ce, sans altération de leur capacité d'absorption lors d'utilisations ultérieures.

Contre toute attente, les inventeurs ont constaté que l'utilisation de solvants alternatifs et plus précisément de solvants eutectiques profonds (DESs) permet de répondre à ce besoin.

Ainsi, la présente invention concerne, selon un premier aspect tel que défini dans la revendication 1, un procédé d'épuration d'un effluent gazeux contenant au moins un composé organique volatil (COV), ledit procédé comprenant au moins les étapes consistant à :
(a) disposer d'au moins un solvant eutectique profond (DES) comprenant :
   (aa) au moins un composé de formule (I) R₁R₂R₃R₄Y⁺X⁻
      dans laquelle
      - Y est un atome d'azote ou un atome de phosphore ;
      - R₁, R₂, R₃ et R₄ sont indépendamment les uns des autres choisis parmi un atome d'hydrogène, un alkyle en C₁ à C₁₈ linéaire ou ramifié, un alcoxy en C₁ à C₁₀ linéaire ou ramifié, un cycloalkyle en C₃ à C₁₀, un aryle en C₆ à C₁₀ ou un aralkyle en C₇ à C₁₂ linéaire ou ramifié, lesdits alkyle, alcoxy, cycloalkyle, aryle et aralkyle pouvant être substitués par un ou plusieurs substituants choisis parmi un groupe hydroxyle, un atome d'halogène, un groupe acyle en C₂ à C₁₀, un groupe SR₅, un groupe NH₂, un groupe CN, un groupe NO₂, un groupe CO₂R₅, un groupe CHO, un groupe COR₅ et un groupe OR₅, où R₅ est choisi parmi un groupe alkyle en C₁ à C₁₈ et un groupe cycloalkyle en C₃ à C₁₀; et
      - X est un atome d'halogène ; et
   (bb) au moins un composé (II) qui est un donneur de liaison hydrogène capable de former un complexe avec X⁻ ; et
(b) mettre en contact ledit solvant eutectique profond de l'étape (a) avec ledit effluent gazeux à épurer dans des conditions propices à l'absorption dudit COV par ledit DES.

Certes les DESs sont déjà bien connus pour leur application dans l'absorption de gaz tels que le dioxyde de carbone et le dioxyde de soufre (Garcia et al., Energy Fuels, 2015, 29, 2616-2644, Yang et al., Green Chem., 2013, 15(8), 2261-2265, Lin et al., J. Chem. Thermodynamics, 2014, 68, 216-220, Leron et al., J. Taiwan Inst. Chem. E., 2013, 44(6), 879-885, et Zhang et al., Chem. Soc Rev., 2012, 41(21), 7108-7146) toutefois, à la connaissance des inventeurs aucune étude n'a, jusqu'à ce jour, porté sur leur utilisation en tant que solvants de lavage pour les COVs.

Il est également connu que les DESs possèdent des propriétés physico-chimiques proches de celles des LI (densité, viscosité, conductivité, tension de surface, inertie chimique, etc.).

Cependant, contrairement aux LI susceptibles d'être toxiques selon la nature du cation ou de l'anion, les DESs sont, de manière avantageuse, constitués de composés «verts» et leur procédé de préparation ne nécessite aucune étape de purification.

Ainsi, les DESs allient à la fois les propriétés physico-chimiques intéressantes des LI avec l'avantage d'être plus respectueux de l'environnement, et plus simples à mettre en œuvre.

En conséquence, les DESs sont une alternative avantageuse aux solvants de lavage traditionnels à plusieurs titres, en termes de coûts, de disponibilité, de biodégradabilité, d'innocuité et d'efficacité vis-à-vis des COVs hydrophiles et des COVs hydrophobes.

Le procédé selon l'invention peut comporter en outre, consécutivement à l'étape (b), une étape de récupération de l'effluent gazeux épuré comprenant une concentration finale en COVs inférieure à 110 mg.m⁻³, et voire mieux dénué (exempt) de COVs.

Au sens de l'invention, l'expression « concentration initiale en COVs » désigne la concentration en COVs présente dans l'effluent gazeux à épurer avant épuration, c'est-à-dire avant l'absorption des COVs par les DESs.

Au sens de l'invention, on entend par « concentration finale en COVs », la concentration en COVs demeurant dans l'effluent gazeux épuré et qui n'ont donc pas été absorbés par les DESs.

Ainsi, selon un mode de réalisation particulier, le procédé selon l'invention, comprend en outre consécutivement à l'étape (b), la récupération dudit effluent gazeux appauvri en COVs et de préférence dénué (exempt) de COVs.

Au sens de l'invention, l'expression « appauvri en COVs » signifie que la concentration finale en COVs dans l'effluent gazeux épuré est inférieure à la concentration initiale en COVs dans l'effluent gazeux destiné à être épuré.

Selon un mode de réalisation particulièrement préféré, la concentration finale en COVs dans l'effluent gazeux épuré peut être nulle. Selon ce mode de réalisation, l'effluent gazeux récupéré est ainsi dénué (exempt) de COVs.

L'invention concerne, selon un autre aspect tel que défini dans la revendication 12, l'utilisation d'au moins un solvant eutectique profond tel que défini dans la présente divulgation, pour absorber au moins un composé organique volatil contenu dans un effluent gazeux.

L'invention décrit également une composition comprenant au moins un composé organique volatil, au moins un solvant eutectique profond et au moins une cyclodextrine, telle que définie dans la revendication 13.

Selon l'invention le au moins un composé organique volatil est choisi parmi :
- l'éthane, le propane, le pentane, le butane, l'isopentane, l'hexane, et le *tert*-butylcyclohexane ;
- l'éthylène, le propylène, et le 1-décène ;
- des arènes, en particulier le benzène, le toluène, le xylène, l'éthylbenzène, le styrène, et l'anéthol ;
- les aldéhydes, en particulier le formaldéhyde, et l'acétaldéhyde ;
- des cétones, en particulier la méthyléthylcétone et la méthylisobutylcétone ;
- des esters, en particulier l'acétate de méthyle, l'acétate d'éthyle, l'acétate de propyle, et l'acétate de butyle ;
- des composés organiques volatils chlorés, en particulier le dichlorométhane, le trichlorométhane, le tétrachlorométhane, le trichloroéthylène, le tétrachloroéthylène et le chlorure de vinyle ;
- des composés organiques volatils soufrés, en particulier les mercaptans et les alkylsulfures, plus particulièrement le diméthylsulfure, le diméthyldisulfure, et le diéthylsulfure ;
- et leurs mélanges.

Selon un mode de réalisation particulier, ledit composé organique volatil est présent dans la composition sous une forme absorbée audit solvant eutectique profond tel que défini dans la présente divulgation.

L 'addition de cyclodextrine(s) aux compositions selon la présente divulgation permet d'améliorer la capacité d'absorption des DESs convenant à l'invention, comme montré dans l'exemple 5 ci-après.

Parmi les cyclodextrines des compositions selon l'invention, on peut citer notamment les α-cyclodextrines (également nommées α-CD), les β-cyclodextrines (également nommées β-CD dans la présente description) et les γ-cyclodextrines (également nommées γ-CD), substituées ou non.

Parmi les cyclodextrines substituées, on peut citer plus particulièrement les α-cyclodextrines, les β-cyclodextrines et les γ-cyclodextrines substituées par un ou plusieurs groupements méthyle(s), hydroxypropyle(s) et/ou sulfobutyléther(s).

Lorsqu'elles sont substituées, les cyclodextrines convenant à l'invention sont de préférence des β-cyclodextrines substituées telles que les HP-β-CD (hydroxypropyl-β-cyclodextrines), les SBE-β-CD (sulfobutyléther-β-cyclodextrines) et les β-cyclodextrines méthylées telles que la DIMEB (heptakis(2,6-di-O-méthyl)-β-cyclodextrine), la RAMEB (β-cyclodextrine statistiquement méthylée ou randomly-methylated-β-cyclodextrin, en anglais), la TRIMEB (heptakis(2,3,6-tri-O-méthyl)-β-cyclodextrine) et la CRYSMEB (β-cyclodextrine faiblement méthylée).

Ainsi, les compositions selon l'invention comprennent au moins une cyclodextrine choisie parmi les α-cyclodextrines, les β-cyclodextrines, les γ-cyclodextrines, substituées ou non, et leurs mélanges, de préférence choisie parmi une α-cyclodextrine, une β-cyclodextrine, une γ-cyclodextrine, une HP-β-CD, la CRYSMEB, la RAMEB, et leurs mélanges, et encore plus préférentiellement choisie parmi une α-cyclodextrine, une β-cyclodextrine une γ-cyclodextrine, une HP-β-CD, la CRYSMEB et la RAMEB.

Comme il ressort de la partie expérimentale qui suit, le procédé selon l'invention est particulièrement avantageux et ce à plus d'un titre.

Plus précisément, il permet d'accéder à une capacité d'absorption comprise entre 70% et 100% de la quantité initiale de COVs hydrophiles ou hydrophobes.

En outre, les inventeurs ont découvert que la constante de Henry (H_{cc}) des COVs, grandeur thermodynamique déterminante dans les procédés d'absorption, est de manière significative bien inférieure à celle du même composé dans l'eau, ce qui traduit une meilleure capacité absorbante.

Les inventeurs ont également montré que par exemple, pour le toluène, les constantes de Henry déterminées pour des DESs à base de bromure de tétrabutylphosphonium (TBP) et de bromure de tétrabutylammonium (N₄₄₄₄Br) sont du même ordre de grandeur que celles obtenues dans les liquides ioniques et les huiles de silicone.

Les inventeurs ont également constaté que la présence d'humidité dans les effluents gazeux n'engendre pas d'effet(s) néfaste(s) dans le procédé d'absorption selon l'invention.

Enfin, les inventeurs ont démontré que le recyclage de la solution absorbante comprenant des DESs convenant à l'invention n'a aucun impact négatif sur sa capacité d'absorption.

### PROCEDE SELON L'INVENTION

### Définition des solvants eutectiques profonds (DESs)

Les solvants eutectiques profonds sont des solvants alternatifs (ou « solvants verts ») qui ont été découverts en 2003 par Abbott et al. (Chem. Commun., 2003, 9, 70-71). Ils sont généralement composés de deux ou trois constituants qui sont capables d'auto-association, souvent par des liaisons hydrogène, pour former un mélange eutectique présentant un point de fusion inférieur à celui de chaque constituant pris individuellement.

Plus particulièrement, les DESs convenant à l'invention consistent en un mélange d'un composé accepteur de liaison hydrogène (également nommé HBA) figuré par un sel ammonium ou phosphonium et d'un composé donneur de liaison hydrogène (également nommé HBD).

Plus particulièrement, un DES profond convenant à l'invention comprend :
(aa) au moins un composé de formule (I) R₁R₂R₃R₄Y⁺X⁻ dans laquelle
   - Y est un atome d'azote ou un atome de phosphore ;
   - R₁, R₂, R₃ et R₄ sont indépendamment les uns des autres choisis parmi un atome d'hydrogène, un alkyle en C₁ à C₁₈ linéaire ou ramifié, un alcoxy en C₁ à C₁₀ linéaire ou ramifié, un cycloalkyle en C₃ à C₁₀, un aryle en C₆ à C₁₀ ou un aralkyle en C₇ à C₁₂ linéaire ou ramifié, lesdits alkyle, alcoxy, cycloalkyle, aryle et aralkyle pouvant être substitués par un ou plusieurs substituants choisis parmi un groupe hydroxyle, un atome d'halogène, un groupe acyle en C₂ à C₁₀, un groupe SR₅, un groupe NH₂, un groupe CN, un groupe NO₂, un groupe CO₂R₅, un groupe CHO, un groupe COR₅ et un groupe OR₅, où R₅ est choisi parmi un groupe alkyle en C₁ à C₁₈ et un groupe cycloalkyle en C₃ à C₁₀; et
   - X est un atome d'halogène ; et
(bb) au moins un composé (II) qui est un donneur de liaison hydrogène capable de former un complexe avec X⁻.

Dans le cadre de la présente invention :
- le composé de formule (I) est un accepteur de liaison hydrogène et le composé (II) est un donneur de liaison hydrogène.
- un alkyle en C₁ à C₁₈ désigne un groupe alkyle comprenant de 1 à 18 atomes de carbone. Un tel groupe alkyle peut être linéaire ou ramifié et peut être choisi parmi méthyle, éthyle, propyle, isopropyle, butyle, isobutyle, tertiobutyle, pentyle, hexyle, heptyle, octyle, nonyle, décyle, undécyle, dodécyle, tridécyle, tétradécyle, pentadécyle, hexadécyle, heptadécyle, octadécyle.

Par analogie, un alkyle en C₁ à C₈ désigne un groupe alkyle comprenant de 1 à 8 atomes de carbone et un alkyle en C₁ à C₄ désigne un groupe alkyle comprenant de 1 à 4 atomes de carbone.
- un alcoxy en C₁ à C₁₀ désigne un groupe alcoxy comprenant de 1 à 10 atomes de carbone. Un tel groupe alcoxy peut être linéaire ou ramifié et peut être choisi parmi méthoxy, éthoxy, propoxy, butoxy, pentoxy, hexoxy, heptoxy, nonoxy, décoxy.
- un cycloalkyle en C₃ à C₁₀ désigne un groupe cycloalkyle comprenant de 3 à 10 atomes de carbone. Un tel groupe cycloalkyle peut être choisi parmi cyclopropyle, cyclobutyle, cyclopentyle, cyclohexyle, cycloheptyle, cyclooctyle, cyclononyle et cyclodécyle ;
- un aryle en C₆ à C₁₀ désigne un groupe aryle monocyclique ou bicyclique comprenant de 6 à 10 atomes de carbone. Un tel groupe aryle peut être choisi parmi un phényle, un naphtyle.
- un aralkyle en C₇ à C₁₂ désigne un groupe comprenant une partie alkyle et une partie aryle, l'ensemble de ces deux parties comportant de 7 à 12 atomes de carbone et la partie alkyle étant liée au radical Y figuré par l'atome de phosphore ou l'atome d'azote. La partie aryle peut être monocyclique ou bicyclique et la partie alkyle peut être linéaire ou ramifié. Un tel groupe aryle peut être choisi parmi un benzyle, un phénéthyle, un phénylpropyle, un phénylbutyle, un naphtylméthyle, un naphtyléthyle.
- un acyle en C₂ à C₁₀ désigne groupe acyle comprenant 2 à 10 atomes de carbone. Un tel groupe acyle peut être linéaire ou ramifié et peut être choisi parmi un acétyle, un propionyle, un butyryle, un pentanoyle, un hexanoyle (ou caproyle), un heptanoyle, un octanoyle, un nonanoyle.

Comme énoncé ci-avant les groupes alkyle, alcoxy, cycloalkyle, aryle et aralkyle peuvent indépendamment les uns des autres être substitués par un ou plusieurs substituants choisis parmi un groupe hydroxyle, un atome d'halogène, un groupe acyle en C₂ à C₁₀, un groupe SR₅, un groupe NH₂, un groupe CN, un groupe NO₂, un groupe CO₂R₅, un groupe CHO, un groupe COR₅ et un groupe OR₅, où R₅ est choisi parmi un groupe alkyle en C₁ à C₁₈ ou un groupe cycloalkyle en C₃ à C₁₀.

Selon un mode de réalisation particulier, le radical X du composé de formule (I) est un atome de chlore, de brome, de fluor, ou d'iode, de préférence un atome de chlore ou de brome.

Selon un autre mode de réalisation particulier, les groupes R₁, R₂, R₃ et R₄ sont indépendamment les uns des autres choisis parmi un alkyle en C₁ à C₁₈ linéaire ou ramifié éventuellement substitués par un ou plusieurs substituants choisis parmi un groupe hydroxyle, un atome d'halogène, un groupe acyle en C₂ à C₁₀, un groupe SR₅, un groupe NH₂, un groupe CN, un groupe NO₂, un groupe CO₂R₅, un groupe CHO, un groupe COR₅ et un groupe OR₅, où R₅ est choisi parmi un groupe alkyle en C₁ à C₁₈ et un groupe cycloalkyle en C₃ à C₁₀, de préférence un groupe hydroxyle.

Selon un mode de réalisation préféré, les groupes R₁, R₂, R₃ et R₄ sont indépendamment les uns des autres choisis parmi un alkyle en C₁ à C₁₈ linéaire ou ramifié éventuellement substitué par un ou plusieurs groupes hydroxyles, de préférence choisis parmi un alkyle en C₁ à C₈ linéaire éventuellement substitué par un ou plusieurs groupes hydroxyles, et plus préférentiellement choisis parmi un alkyle en C₁ à C₄ linéaire éventuellement substitué par un ou plusieurs groupes hydroxyles.

Selon un mode de réalisation préféré, les groupes R₁, R₂, R₃ et R₄ sont indépendamment les uns des autres choisis parmi un alkyle en C₁ à C₁₈ linéaire ou ramifié éventuellement substitué par un groupe hydroxyle, de préférence parmi un alkyle en C₁ à C₈ linéaire éventuellement substitué par un ou plusieurs groupes hydroxyles, et plus préférentiellement parmi un alkyle en C₁ à C₄ linéaire éventuellement substitué par un groupe hydroxyle.

Selon un mode de réalisation préféré, le composé de formule (I) est choisi parmi le chlorure de choline (abrégé également ChCl dans la présente description), le bromure de tétrabutylphosphonium (abrégé également TBP dans la présente description), le bromure de tétrabutylammonium (abrégé également N₄₄₄₄Br dans la présente description), et leurs mélanges.

Selon un mode de réalisation particulier, le composé (II) est choisi parmi l'acide lévulinique (abrégé également Lev dans la présente description), l'urée (abrégé également U dans la présente description), l'éthylène glycol (abrégé également EG dans la présente description), le glycérol (abrégé également G dans la présente description), l'acide décanoïque (abrégé également Dec dans la présente description), un alkylène glycol, l'acide malonique, la thiourée, la N-méthylurée, N,N'-diméthylurée, N,N-diméthylurée, l'acétamide, le benzamide, le 2,2,2-trifluoroacétamide, l'imidazole, l'acide adipique, l'acide benzoïque, l'alcool benzylique, l'acide citrique, le phénol, le *p*-méthylphénol, l'o-méthylphénol, le m-méthylphénol, le *p*-chlorophénol, le D-fructose, la vanilline (abrégé également Van dans la présente description), l'acide oxalique (abrégé également Ox. Ac dans la présente description), l'acide oxalique dihydraté, l'aniline, l'acide phénylacétique, l'acide 3-phénylpropionique, l'acide succinique, l'acide tricarballylique, l'acide itaconique, le xylitol, le D-sorbitol, le L-(+)-acide tartrique, le D-isosorbide, l'acide 4-hydroxybenzoïque, l'acide caféique, l'acide *p*-coumarique, l'acide trans-cinnamique, l'acide octanedioïque, l'acide gallique, le résorcinol, et leurs mélanges, de préférence choisi parmi l'acide lévulinique, l'urée, l'éthylène glycol, le glycérol, l'acide décanoïque, l'acide oxalique, le xylitol, la vanilline et leurs mélanges.

Selon un mode de réalisation particulier, un DES profond convenant à l'invention comprend :
(aa) au moins un composé de formule (I) R₁R₂R₃R₄Y⁺X⁻
   dans laquelle
   - Y est un atome d'azote ou un atome de phosphore ;
   - R₁, R₂, R₃ et R₄ sont indépendamment les uns des autres choisis parmi un atome d'hydrogène, un alkyle en C₁ à C₁₈ linéaire ou ramifié, un alcoxy en C₁ à C₁₀ linéaire ou ramifié, un cycloalkyle en C₃ à C₁₀, un aryle en C₆ à C₁₀ ou un aralkyle en C₇ à C₁₂ linéaire ou ramifié, lesdits alkyle, alcoxy, cycloalkyle, aryle et aralkyle pouvant être substitués par un ou plusieurs substituants choisis parmi un groupe hydroxyle, un atome d'halogène, un groupe acyle en C₂ à C₁₀, un groupe SR₅, un groupe NH₂, un groupe CN, un groupe NO₂, un groupe CO₂R₅, un groupe CHO, un groupe COR₅ et un groupe OR₅, où R₅ est choisi parmi un groupe alkyle en C₁ à C₁₈ et un groupe cycloalkyle en C₃ à C₁₀; et
   - X est un atome d'halogène ; et
(bb) au moins un composé (II) qui est un donneur de liaison hydrogène capable de former un complexe avec X⁻ choisi parmi l'acide lévulinique, l'urée, l'éthylène glycol, le glycérol, l'acide décanoïque, un alkylène glycol, l'acide malonique, la thiourée, la N-méthylurée, N,N'-diméthylurée, N,N-diméthylurée, l'acétamide, le benzamide, le 2,2,2-trifluoroacétamide, l'imidazole, l'acide adipique, l'acide benzoïque, l'alcool benzylique, l'acide citrique, le phénol, le *p*-méthylphénol, l'o-méthylphénol, le *m*-méthylphénol, le *p*-chlorophénol, le D-fructose, la vanilline, l'acide oxalique, l'acide oxalique dihydraté, l'aniline, l'acide phénylacétique, l'acide 3-phénylpropionique, l'acide succinique, l'acide tricarballylique, l'acide itaconique, le xylitol, le D-sorbitol, le L-(+)-acide tartrique, le D-isosorbide, l'acide 4-hydroxybenzoïque, l'acide caféique, l'acide *p*-coumarique, l'acide trans-cinnamique, l'acide octanedioïque, l'acide gallique, le résorcinol, et leurs mélanges, de préférence choisi parmi l'acide lévulinique, l'urée, l'éthylène glycol, le glycérol, l'acide décanoïque, l'acide oxalique, le xylitol, la vanilline et leurs mélanges.

Selon un mode de réalisation particulier, un DES profond convenant à l'invention comprend :
(aa) au moins un composé de formule (I) R₁R₂R₃R₄Y⁺X⁻
   dans laquelle
   - Y est un atome d'azote ou un atome de phosphore ;
   - R₁, R₂, R₃ et R₄ sont indépendamment les uns des autres choisis parmi un alkyle en C₁ à C₁₈ linéaire ou ramifié, lesdits alkyles pouvant être substitués indépendamment les uns des autres par au moins un groupe hydroxyle;
   et
(bb) au moins un composé (II) qui est un donneur de liaison hydrogène capable de former un complexe avec X⁻ choisi parmi l'acide lévulinique, l'urée, l'éthylène glycol, le glycérol, l'acide décanoïque, l'acide oxalique, le xylitol, et la vanilline.

Selon un mode de réalisation particulier, un DES convenant à l'invention est choisi parmi le chlorure de choline : urée, le chlorure de choline : glycérol, le chlorure de choline : éthylène glycol, le chlorure de choline : acide lévulinique, le chlorure de choline : acide oxalique, le chlorure de choline : vanilline, le bromure de tétrabutylphosphonium : glycérol, le bromure de tétrabutylphosphonium : acide lévulinique, le bromure de tétrabutylphosphonium : éthylène glycol, le bromure de tétrabutylphosphonium : xylitol, le bromure de tétrabutylammonium : acide décanoïque, et leurs mélanges, de préférence choisi parmi le chlorure de choline : urée, le chlorure de choline : glycérol, le chlorure de choline : éthylène glycol, le chlorure de choline : acide lévulinique, le bromure de tétrabutylphosphonium : glycérol, le bromure de tétrabutylphosphonium : acide lévulinique, le bromure de tétrabutylphosphonium : éthylène glycol, et le bromure de tétrabutylammonium : acide décanoïque.

Selon un mode de réalisation particulièrement préféré, un solvant eutectique profond convenant à l'invention comprend :
(aa) au moins un composé de formule (I) R₁R₂R₃R₄Y⁺X⁻
   dans laquelle
   - Y est un atome d'azote ;
   - R₁, R₂, R₃ et R₄ sont indépendamment les uns des autres choisis parmi un alkyle en C₁ à C₁₈ linéaire ou ramifié, lesdits alkyles pouvant être substitués indépendamment les uns des autres par au moins un groupe hydroxyle; et
   - X est un atome de chlore ou un atome de brome;
   et
(bb) au moins un composé (II) qui est un donneur de liaison hydrogène capable de former un complexe avec X⁻ choisi parmi l'acide lévulinique, l'acide décanoïque, l'urée, le glycérol l'éthylène glycol, l'acide oxalique et la vanilline.

Selon un autre mode de réalisation particulièrement préféré, un solvant eutectique profond convenant à l'invention comprend :
(aa) au moins un composé de formule (I) R₁R₂R₃R₄Y⁺X⁻
   dans laquelle
   - Y est un atome de phosphore ;
   - R₁, R₂, R₃ et R₄ sont indépendamment les uns des autres choisis parmi un alkyle en C₁ à C₁₈ linéaire ou ramifié; et
   - X est un atome de brome;
   et
(bb) au moins un composé (II) qui est un donneur de liaison hydrogène capable de former un complexe avec X⁻ choisi parmi l'acide lévulinique, l'éthylène glycol, le glycérol, et le xylitol.

Selon un mode de réalisation encore plus préféré, un solvant eutectique profond convenant à l'invention comprend :
(aa) au moins un composé de formule (I) R₁R₂R₃R₄Y⁺X⁻
   dans laquelle
   - Y est un atome d'azote ;
   - R₁, R₂, R₃ et R₄ sont indépendamment les uns des autres choisis parmi un alkyle en C₁ à C₄ linéaire, lesdits alkyles pouvant être substitués indépendamment les uns des autres par au moins un groupe hydroxyle; et
   - X est un atome de chlore ou un atome de brome;
   et
(bb) au moins un composé (II) qui est un donneur de liaison hydrogène capable de former un complexe avec X⁻ choisi parmi l'acide lévulinique, l'acide décanoïque, l'urée, le glycérol et l'éthylène glycol.

Selon un autre mode de réalisation encore plus préféré, un solvant eutectique profond convenant à l'invention comprend :
(aa) au moins un composé de formule (I) R₁R₂R₃R₄Y⁺X⁻
   dans laquelle
   - Y est un atome d'azote ;
   - R₁, R₂, R₃ et R₄ sont indépendamment les uns des autres choisis parmi un alkyle en C₁ à C₄ linéaire, lesdit alkyles pouvant être substitués indépendamment les uns des autres par au moins un groupe hydroxyle; et
   - X est un atome de chlore;
   et
(bb) au moins un composé (II) qui est un donneur de liaison hydrogène capable de former un complexe avec X⁻ choisi parmi l'acide lévulinique, l'urée, le glycérol et l'éthylène glycol.

Selon un autre mode de réalisation encore plus préféré, un solvant eutectique profond convenant à l'invention comprend :
(aa) au moins un composé de formule (I) R₁R₂R₃R₄Y⁺X⁻
   dans laquelle
   - Y est un atome d'azote ;
   - R₁, R₂, R₃ et R₄ sont indépendamment les uns des autres choisis parmi un alkyle en C₁ à C₄ linéaire; et
   - X est un atome de brome;
   et
(bb) au moins un composé (II) qui est un donneur de liaison hydrogène capable de former un complexe avec X⁻ représenté par l'acide décanoïque.

Selon un autre mode de réalisation encore plus préféré, un solvant eutectique profond convenant à l'invention comprend :
(aa) au moins un composé de formule (I) R₁R₂R₃R₄Y⁺X⁻
   dans laquelle
   - Y est un atome de phosphore ;
   - R₁, R₂, R₃ et R₄ sont indépendamment les uns des autres choisis parmi un alkyle en C₁ à C₄ linéaire; et
   - X est un atome de brome;
   et
(bb) au moins un composé (II) qui est un donneur de liaison hydrogène capable de former un complexe avec X⁻ choisi parmi l'acide lévulinique, l'éthylène glycol et le glycérol.

Selon un mode de réalisation particulier, le rapport molaire du composé (I) au composé (II) va de 1 :1 à 1 :12, en particulier est de 1:1, 1:2, 1:3, 1:4, 1:5, 1:6, 1:7, 1:8, 1:9, 1:10, 1:11 ou 1:12, et de préférence de 1 :1 à 1 :6.

Un DES convenant à l'invention est un liquide présentant une viscosité inférieure à 5 000 mPa.s, de préférence allant de 10 mPa.s à 1 000 mPa.s mesurée à 30°C.

La viscosité des DESs convenant à l'invention est par exemple mesurée à l'aide d'un Stabinger Viscometer™: SVM 3000 (Anton-Paar) à une température de 30°C.

En outre, un DES convenant à l'invention possède une température de fusion (T_{f}) ou une température de transition vitreuse (T_{g}) inférieure à 80°C, de préférence comprise entre -66 °C et 25 °C.

Comme exposé précédemment, les DESs convenant à l'invention ne sont pas chimiquement réactifs avec les COVs absorbés. Cette caractéristique est avantageuse pour permettre une mise en œuvre aisée du procédé selon l'invention.

Les DESs convenant à l'invention peuvent être préparés de toute manière connue de l'homme du métier. Comme évoqué précédemment, de manière avantageuse, leur procédé de synthèse ne nécessite aucune étape de purification.

Par exemple, les DESs convenant à l'invention peuvent être synthétisés selon le protocole suivant.

Les composés (I) et (II) sont mélangés dans un rapport molaire allant de 1 :1 à 1 :12, de préférence de 1 :1 à 1 :6. Le mélange est ensuite soumis à agitation à pression atmosphérique et à une température inférieure à 100°C (de préférence 60°C, à Pₐₜₘ pendant 24h) jusqu'à obtention d'un liquide homogène. Les solvants obtenus sont ensuite caractérisés par la mesure de leur point de fusion.

### Définition des composés organiques volatils (COVs)

Par « composé organique volatil », on entend tout composé chimique possédant du carbone et de l'hydrogène, lequel pouvant être remplacé par d'autres atomes tels que les halogènes, l'oxygène, le phosphore ou le soufre et possédant une pression de vapeur saturante supérieure à 10 Pa dans les conditions normales de température et de pression ayant une volatilité correspondante dans des conditions d'utilisation particulières (pression et température).

Comme évoqué précédemment, de manière avantageuse, les COVs hydrophiles et les COVs hydrophobes peuvent être absorbés par les DESs utilisés selon la présente invention.

Un COV tel que défini dans la présente invention est un COV non méthanique c'est-à-dire qu'il est distinct du méthane. En d'autres termes, lorsque le COV est un alcane, il est différent du méthane.

Ainsi, parmi les composés organiques volatils convenant à l'invention, on peut notamment citer :
- des alcanes, en particulier l'éthane, le propane, le pentane, le butane, l'isopentane, l'hexane, et le *tert*-butylcyclohexane ;
- des alcènes, en particulier l'éthylène, le propylène, le 1-décène, et le limonène ;
- des arènes, en particulier le benzène, le toluène, le xylène, l'éthylbenzène, le styrène, et l'anéthol ;
- les aldéhydes, en particulier le formaldéhyde, et l'acétaldéhyde ;
- des cétones, en particulier la méthyléthylcétone (abrégée également MEK dans la présente description) et la méthylisobutylcétone ;
- des esters, en particulier l'acétate de méthyle, l'acétate d'éthyle, l'acétate de propyle, et l'acétate de butyle ;
- des composés organiques volatils chlorés, en particulier le dichlorométhane, le trichlorométhane, le tétrachlorométhane, le trichloroéthylène, le tétrachloroéthylène et le chlorure de vinyle ;
- des composés organiques volatils soufrés, en particulier les mercaptans et les alkylsulfures, plus particulièrement le diméthylsulfure, le diméthyldisulfure, et le diéthylsulfure ;
- et leurs mélanges.

Plus particulièrement, un COV convenant à l'invention est choisi parmi le toluène, le dichlorométhane, l'acétaldéhyde, la méthyléthylcétone, le *tert-*butylcyclohexane, le 1-décène, le limonène, l'anéthol et leurs mélanges, encore plus préférentiellement parmi le toluène, le dichlorométhane, l'acétaldéhyde, la méthyléthylcétone, le *tert*-butylcyclohexane, le 1-décène, le limonène, et l'anéthol.

La concentration initiale (c'est-à-dire avant épuration de l'effluent gazeux) en COV(s) est comprise entre 1 g.m⁻³ et 10 000 g.m⁻³, de préférence entre 2,9 g.m⁻³ et 1180 g.m⁻³.

Les valeurs des constantes de Henry (H_{cc}) des COVs dans les DESs convenant à l'invention sont déterminées par le rapport des concentrations dans la phase gazeuse et dans la phase liquide (H_{cc} = C_{gaz}/C_{liq}). Une adaptation de la méthode VPC (Vapor Phase Calibration method, en anglais, ou méthode de l'étalonnage de la phase vapeur) a été ainsi développée pour pouvoir être appliquée aux DESs. Des flacons contenant le COV en solution aqueuse sont utilisés afin de servir de référence. A partir de la constante de Henry sans dimension déterminée en solution et de la loi de conservation de masse, les inventeurs ont pu calculer la concentration en COV dans l'espace de tête des flacons contenant les solutions aqueuses. Ceci leur a permis d'obtenir un étalonnage reliant l'aire du pic chromatographique avec la concentration du COV dans l'espace de tête (phase gazeuse). La constante de Henry des COV dans les DES est alors obtenue par la loi de conservation de masse à partir de cette droite d'étalonnage en faisant le rapport entre la concentration du COV dans la phase gazeuse et la concentration du COV dans le DES (C_{gaz}/C_{liq}). Les H_{cc} sont comprises entre 0,0001 et 0,3000, de préférence entre 0,0001 et 0,2300.

### Couples COV/DES

De la partie expérimentale, et plus précisément du tableau 3 de l'exemple 2, il ressort que certains polluants COVs ont plus d'affinité que d'autres vis-à-vis d'un absorbant donné.

Ainsi, selon un mode de réalisation préféré, un couple polluant/absorbant (COV/DES) convenant à l'invention est choisi parmi :
- toluène / TBP : Lev ;
- toluène / N₄₄₄₄Br : Dec ;
- toluène / TBP : G ;
- toluène / ChCl : Lev ;
- toluène / TBP : EG ;
- dichlorométhane / TBP : Lev ;
- dichlorométhane / N₄₄₄₄Br : Dec;
- dichlorométhane / TBP : G ;
- dichlorométhane / ChCl : U ;
- dichlorométhane / ChCl : Van ;
- dichlorométhane / ChCl : EG ;
- dichlorométhane / TBP : EG ;
- acétaldéhyde / TBP : G ;
- acétaldéhyde / ChCl : U ;
- acétaldéhyde / ChCl : G ;
- acétaldéhyde / ChCl : EG ;
- acétaldéhyde / ChCl : Lev ;
- acétaldéhyde / TBP : Lev ;
- acétaldéhyde / N₄₄₄₄Br : Dec ;
- acétaldéhyde / ChCl : Ox. Ac ;
- acétaldéhyde / ChCl : Van ;
- acétaldéhyde / TBP : EG ;
- méthyléthylcétone / TBP : EG ;
- méthyléthylcétone / ChCl : Lev ;
- méthyléthylcétone / TBP : Lev ;
- méthyléthylcétone / TBP : Xylitol ;
- méthyléthylcétone / N₄₄₄₄Br : Dec ;
- *tert*-butylcyclohexane / TBP : EG ;
- 1-décène / TBP : EG ;
- 1-décène / TBP : Lev ;
- 1-décène / TBP : Xylitol ;
- 1-décène / N₄₄₄₄Br : Dec ;
- Anéthol / ChCl : U ;
- Anéthol / ChCl: EG ;
- Anéthol / ChCl : G ;
- Anéthol / ChCl : Lev ;
- Limonène / ChCl : Lev ;
- Limonène / TBP : EG.

Selon un mode de réalisation plus préféré, ce couple polluant/absorbant (COV/DES) est choisi parmi :
- toluène / TBP : Lev ;
- toluène / N₄₄₄₄Br : Dec;
- dichlorométhane / TBP : Lev ;
- dichlorométhane / N₄₄₄₄Br : Dec ;
- acétaldéhyde / TBP : G ;
- *tert*-butylcyclohexane / TBP : EG,
- 1-décène / TBP : EG,
- Anéthol / ChCl : U ;
- Anéthol / ChCl : EG ;
- Anéthol / ChCl : G ;
- Anéthol / ChCl : Lev ; et
- Limonène / TBP : EG.

Le rapport pondéral COVs/DESs est compris entre 0,0003 et 0,08 à 30°C.

### Conditions réactionnelles

Comme exposé précédemment, le procédé selon l'invention comprend une étape (a) de mise à disposition d'au moins un solvant eutectique profond et une étape (b) de mise en contact dudit DES avec l'effluent gazeux à épurer dans des conditions propices à l'absorption dudit COV par ledit DES.

Le procédé d'épuration selon l'invention est réalisé à une température comprise entre 20°C et 100°C, de préférence entre 30°C et 60°C.

Selon l'invention, l'absorption du ou des COV(s) est effectuée par mise en contact de l'effluent gazeux à épurer avec le(s) DES(s) convenant à l'invention par tout moyen connu par l'homme de l'art pour réaliser un contact gaz / liquide.

L'effluent gazeux à épurer peut présenter un débit compris entre 100 m³/h et 100 000 m³/h, de préférence entre entre 100 m³/h et 10 000 m³/h et, comme exposé ci-avant, une concentration en COVs comprise entre 1 g.m⁻³ et 10 000 g.m⁻³, de préférence entre 2,9 g.m⁻³ et 1180 g.m⁻³.

Ainsi, cette mise en contact peut être obtenue dans une unité de transfert par barbotage de gaz dans le DES, par passage à co-courant ou contre-courant de l'effluent gazeux et du DES dans une colonne à garnissage, ou par passage de l'effluent gazeux dans une colonne dans laquelle le DES est pulvérisé par tout moyen tel que moyen mécanique, pneumatique, électrostatique.

Il est également possible de réaliser cette mise en contact par aspiration de l'effluent gazeux à épurer dans un venturi dont le fluide liquide est le solvant d'absorption, ou un dispositif à injecteur.

L'effluent épuré est ensuite recyclé, rejeté dans l'atmosphère ou alimenté dans un autre procédé tel qu'un autre procédé d'épuration.

En effet, outre les COVs, d'autres composés tels que des gaz inorganiques (CO₂, NOx...) peuvent être contenus dans les effluents gazeux destinés à être épurés à l'aide du procédé selon l'invention.

Bien entendu, la présence de ces autres constituants dans les effluents gazeux ne doit pas être de nature à perturber/altérer l'efficacité de l'absorption des COVs par les DESs via le procédé selon l'invention.

Ainsi, lorsque ces composés, différents des COVs, sont considérés comme toxiques/polluants, l'effluent épuré selon le procédé de l'invention peut par la suite être soumis à au moins un autre procédé d'épuration, différent du procédé selon l'invention, afin d'éliminer ces composés indésirables.

Au contraire, si ces composés, distincts des COVs, présentent une certaine innocuité, l'effluent épuré selon le procédé de l'invention peut être rejeté directement dans l'atmosphère.

Le procédé selon l'invention peut être mis en œuvre par circulation, de préférence en boucle fermée.

Ainsi, dans un mode de réalisation préféré, la solution de DES circule globalement en boucle fermée.

Le procédé peut être mis en œuvre en mode continu, semi-continu ou en batch.

Dans un mode de réalisation avantageux, le procédé selon l'invention est mis en œuvre en batch.

La solution absorbante de DES convenant à l'invention peut ensuite être recyclée en vue d'une réutilisation ultérieure. Cette solution peut être utilisée et recyclée plusieurs fois.

Avantageusement, comme démontré dans la partie expérimentale, le recyclage après chaque utilisation n'a pas d'impact négatif sur la capacité absorbante du DES concerné.

L'élimination du ou des COV(s) absorbé(s) dans la solution de DES est réalisée par chauffage de la composition selon l'invention, par exemple dans une étuve, à une température comprise entre 30°C et 80°C, de préférence entre 40°C et 60°C, en particulier à 60°C pendant une durée comprise entre 24h et 72h, de préférence entre 24h et 48h, en particulier de 2 jours.

Le rendement d'épuration de l'effluent gazeux obtenu avec le procédé selon l'invention est compris entre 45% et 100%, de préférence entre 70% et 100%, plus préférentiellement entre 95% et 100%.

D'une manière générale, le procédé selon l'invention peut être appliqué industriellement pour le traitement des émissions de rejets gazeux chargés en COVs en sortie de cheminée par absorption.

Les expressions « *compris entre* ... *et* ... » et « *allant de* ... *à* ... » doivent se comprendre bornes incluses, sauf si le contraire est spécifié.

Les exemples et les figures qui suivent permettront de mieux comprendre l'invention, sans toutefois présenter un caractère limitatif.

### FIGURES

- La figure 1 illustre un schéma de l'étude de l'absorption des COVs par des DESs en mode statique.
- La figure 2 illustre trois essais consécutifs d'absorption de toluène par la même solution de DES ChCl:U à une concentration initiale de COV de 59 g.m⁻³ à 30°C, les deuxième et troisième essais étant chacun réalisé après le recyclage de la solution récupérée de l'essai précédent par chauffage à 60°C pendant 2 jours.
- La figure 3 représente un montage développé pour l'absorption des COVs par des DESs en mode dynamique.
- La figure 4 illustre la solubilité (mg.g⁻¹) du toluène dans le ChCl : U « pur » (concentration en cyclodextrine de 0% en poids) et dans les solutions de ChCl : U avec les cyclodextrines β-CD ou RAMEB avec une concentration initiale de COV de 59 g.m⁻³ et une concentration en cyclodextrine de 2%, 4%, 8% et 10% en poids à 30°C.
- La figure 5 illustre la solubilité (mg.g⁻¹) du toluène dans les DESs purs (ChCl : U ; ChCl : G ; TBP : G et TBP : EG) et les solutions de DESs (ChCl : U ; ChCl : G ; TBP : G et TBP : EG) avec de l'eau avec une concentration initiale de COV de 59 g.m⁻³ et une concentration d'eau de 0,5% et 5% en volume, à 30°C.
- La figure 6 illustre la capacité d'absorption du ChCl:U (exprimée en aire) avec une quantité croissante (en %), à savoir à 0 %, à 2 %, à 4 %, à 6 % et à 10 % de différentes cyclodextrines (α-CD, β-CD, γ-CDs, HP-β-CD, CRYSMEB et RAMEB) pour le toluène.

La figure 7 illustre la capacité d'absorption du ChCl:U (exprimée en aire) avec une quantité croissante (en %), à savoir à 0 %, à 2 %, à 4 %, à 6 % et à 10 % de différentes cyclodextrines (α-CD, β-CD, γ-CDs, HP-β-CD et CRYSMEB) pour le décène.

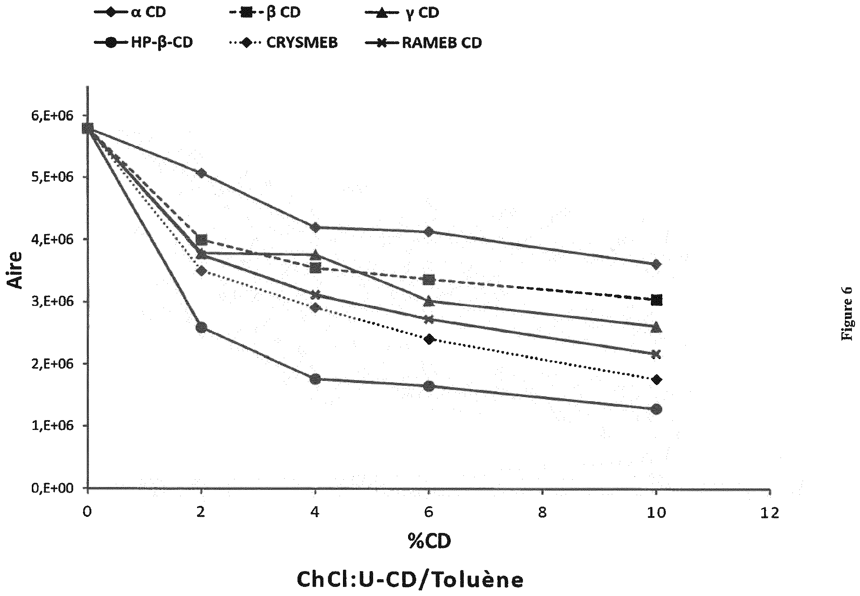

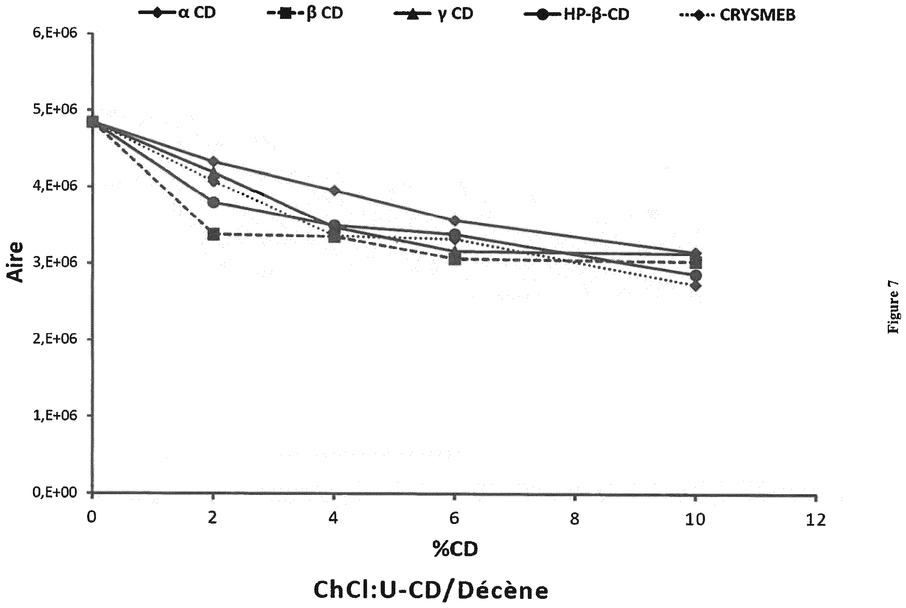

Pour les figures 6 et 7, l'aire obtenue est proportionnelle à la concentration du COV dans la phase gazeuse. Une diminution de l'aire correspond donc à une meilleure solubilisation du COV dans le solvant et donc à une plus grande efficacité d'absorption.

### EXEMPLES

Comme exposé précédemment, les abréviations suivantes sont utilisées :
**ChCl** pour Chlorure de choline
**TBP** pour Bromure de tétrabutylphosphonium
**N₄₄₄₄Br** pour Bromure de tétrabutylammonium
**U** pour Urée
**Lev** pour Acide lévulinique
**G** pour Glycérol
**EG** pour Ethylène glycol
**Dec** pour Acide décanoïque
**MEK** pour méthyléthylcétone
**RAMEB** pour β-cyclodextrine statistiquement méthylée
**β-CD** pour β-cyclodextrine
**N₈₈₈₈Br** pour Bromure de tétraoctylammonium (non compris dans l'invention)
**Ox. Ac** pour Acide Oxalique
**Prop Ac** pour Acide Propionique (non compris dans l'invention)
**Van** pour Vanilline
**α-CD** pour α-cyclodextrines
**γ-CD** pour les γ-cyclodextrines
**HP-β-CD** pour les hydroxypropyl-β-cyclodextrines
**CRYSMEB** pour la β-cyclodextrine faiblement méthylée

### EXEMPLE 1 : Préparation de DESs convenant à l'invention

Les composés (I) et (II) sont mélangés dans un rapport molaire compris entre 1:1 et 1:6. La quantité de chacun des partenaires dépend de la quantité finale souhaitée. Le mélange est ensuite soumis à agitation à pression atmosphérique et à une température inférieure à 100°C (de préférence 60°C, à Pₐₜₘ pendant 24h) jusqu'à obtention d'un liquide homogène. Les solvants obtenus sont ensuite caractérisés par la mesure de leur point de fusion (voir le tableau 1 ci-après).

### 1.1 Chlorure de choline : Urée (rapport molaire 1:2)

60,06 g d'urée sont ajoutés à 69,82 g de chlorure de choline et agités à 60°C jusqu'à obtention d'une solution homogène.

### 1.2 Bromure de tétrabutylphosphonium : Glycérol (rapport molaire 1:1)

169,67 g de bromure de tétrabutylphosphonium sont ajoutés à 46,04 g de glycérol et agités à 60°C jusqu'à obtention d'une solution homogène.

### 1.3 Bromure de tétrabutylammonium : Acide décanoïque (rapport molaire 1:2)

161,184 g de bromure de tétrabutylammonium sont ajoutés à 172,26 g d'acide décanoïque et agités à 60°C jusqu'à obtention d'une solution homogène.

### 1.4 Bromure de tétrabutylphosphonium: Acide lévulinique (rapport molaire 1:6)

169,67 g de bromure de tétrabutylphosphonium sont ajoutés à 348,33 g d'acide lévulinique et agités à 60°C jusqu'à obtention d'une solution homogène.

### 1.5 Chlorure de choline : Glycérol (rapport molaire 1:2)

69,82 g de chlorure de choline sont ajoutés à 92,09 g de glycérol et agités à 60°C jusqu'à obtention d'une solution homogène.

### 1.6 Chlorure de choline : Ethylèneglycol (rapport molaire 1:2)

69,82 g de chlorure de choline sont ajoutés à 62,07 g d'éthylène glycol et agités à 60°C jusqu'à obtention d'une solution homogène.

### 1.7 Chlorure de choline : Acide lévulinique (rapport molaire 1:2)

69,82 g de chlorure de choline sont ajoutés à 116,11 g d'acide lévulinique et agités à 60°C jusqu'à obtention d'une solution homogène.

### 1.8 Bromure de tétrabutylphosphonium : Éthylène glycol (rapport molaire 1:2)

169,67 g de bromure de tétrabutylphosphonium sont ajoutés à 62.07 g d'éthylène glycol et agités à 60°C jusqu'à obtention d'une solution homogène.

### 1.9 Chlorure de choline : Acide Oxalique (rapport molaire 1:1)

60,06 g de chlorure de choline sont ajoutés à 54,18 g d'acide oxalique et agités à 60°C jusqu'à obtention d'une solution homogène.

### 1.10 Chlorure de choline : Vanilline (rapport molaire 1:2)

4,04 g de chlorure de choline sont ajoutés à 8,81 g de vanilline et agités à 60°C jusqu'à obtention d'une solution homogène.

### 1.11 Bromure de tétrabutylphosphonium : Xylose (rapport molaire 1:1 (non compris dans l'invention)

20,02 g de bromure de tétrabutylphosphonium sont ajoutés à 8,85 g de xylose et agités à 60°C jusqu'à obtention d'une solution homogène.

### 1.12 Bromure de tétrabutylphosphonium : Acide propionique (rapport molaire 1:1 (non compris dans l'invention)

10,01 g de bromure de tétrabutylphosphonium sont ajoutés à 2,18 g d'acide propionique et agités à 60°C jusqu'à obtention d'une solution homogène.

### 1.13 Bromure de tétrabutylphosphonium : Xylitol (rapport molaire 1:1)

25,01 g de bromure de tétrabutylphosphonium sont ajoutés à 11,20 g de xylitol et agités à 60°C jusqu'à obtention d'une solution homogène.

### 1.14 Bromure de tétraoctylammonium : Acidé décanoïque (rapport molaire 1:2 (non compris dans l'invention)

6,02 g de bromure de tétraoctylamonium sont ajoutés à 3,78 g d'acide décanoïque et agités à 60°C jusqu'à obtention d'une solution homogène.

Le tableau 1 ci-après récapitule les DESs qui sont préparés selon les protocoles de synthèse précédemment décrits, ainsi que leur température de fusion (T_{f}) ou température de transition vitreuse (T_{g}) correspondante.

**Tableau 1**

| **DES (HBA : HBD)** | **HBA:HBD molaire** | **T_{f}/T_{g} (en °C)** |
|---|---|---|
| ChCl:U | 1:2 | 12 |
| ChCl:G | 1:2 | -33 |
| ChCl:EG | 1:2 | -66 |
| ChCl:Lev | 1:2 | Liquide à température ambiante (20 °C) |
| ChCl :Ox. Ac | 1 :1 | Liquide à température ambiante (20 °C) |
| ChCl :Van | 1 :2 | Liquide à température ambiante (20 °C) |
| TBP:G | 1:1 | Liquide à température ambiante (20 °C) |
| TBP:Lev | 1:6 | Liquide à température ambiante (20 °C) |
| TBP:EG | 1:2 | Liquide à température ambiante (20 °C) |
| TBP:Xylose | 1:1 | Liquide à température ambiante (20 °C) |
| TBP:Prop. Ac | 1:1 | Liquide à température ambiante (20 °C) |
| TBP :Xylitol | 1 :1 | Liquide à température ambiante (20 °C) |
| N₄₄₄₄Br:Dec | 1:2 | Liquide à température ambiante (20 °C) |
| N₈₈₈₈Br :Dec | 1 :2 | Liquide à température ambiante (20 °C) |

### EXEMPLE 2 : Evaluation du potentiel de piégeage des COVs dans les DESs convenant à l'invention

Le potentiel de piégeage des COVs dans les DESs est déterminé par chromatographie en phase gazeuse couplée à l'espace de tête.

Plus particulièrement, l'affinité de trois COVs, à savoir le toluène, le dichlorométhane et l'acétaldéhyde est établie vis-à-vis des DESs illustrés dans le tableau 1 ci-avant.

### Matériels et méthodes

Pour la détermination de la solubilité des COVs dans les DES, des solutions de COVs dans l'éthanol à une concentration de 10 000 ppm et 100 000 ppm sont tout d'abord préparées. Des volumes entre 10 µL et 200 µL de ces solutions sont ajoutés à 3 mL de DES dans un flacon qui est ensuite scellé. Le flacon est conservé 24h sous agitation magnétique à température ambiante (ou sous léger chauffage si le DES est trop visqueux à température ambiante 20°C).

Après 24h sous agitation, le flacon contenant le DES et le COV est placé dans l'espace de tête et la phase gazeuse est analysée par chromatographie en phase gazeuse. L'aire du pic du COV résultant est comparée avec l'aire des pics obtenus par étalonnage et la concentration et quantité de COV dans la phase gazeuse de chaque flacon est calculée. Ainsi la quantité de COV dans l'espace de tête du flacon est établie par rapport à l'étalonnage du COV dans l'eau. Connaissant la quantité totale de COV ajoutée dans le flacon et la quantité présente dans la phase gazeuse, la quantité retenue par la phase liquide (DES) est obtenue par différence entre ces deux valeurs.

Les valeurs des constantes de Henry des COVs dans les DESs sont également déterminées par le rapport des concentrations dans la phase gazeuse et dans la phase liquide (H_{cc} = C_{gaz}/C_{liq}). La constante de Henry (H_{cc}) est la grandeur thermodynamique déterminante dans les procédés d'absorption. Elle doit être la plus faible possible pour obtenir une meilleure capacité absorbante.

Comme exposé ci-avant, une adaptation de la méthode VPC a été ainsi développée pour pouvoir être appliquée aux DESs. Des flacons contenant le COV en solution aqueuse sont utilisés afin de servir de référence. A partir de la constante de Henry sans dimension déterminée en solution et de la loi de conservation de masse les inventeurs ont pu calculer la concentration en COV dans l'espace de tête des flacons contenant les solutions aqueuses. Ceci leur a permis d'obtenir un étalonnage reliant l'aire du pic chromatographique avec la concentration du COV dans l'espace de tête (phase gazeuse). La constante de Henry des COVs dans les DESs est alors obtenue par la loi de conservation de masse à partir de cette droite d'étalonnage en faisant le rapport entre la concentration du COV dans la phase gazeuse et la concentration du COV dans le DES (C_{gaz}/C_{liq}).

Une diminution de la constante de Henry des COV jusqu'à 200 fois comparativement à la constante de Henry du composé dans l'eau est montrée. Le tableau 2 ci-après regroupe les valeurs des constantes de Henry de neuf COVs, à savoir le toluène, le dichlorométhane, l'acétaldéhyde, la méthyléthylcétone (MEK), l'heptane (non compris dans l'invention), le *tert-*butylcyclohexane, le 1-décène, l'anéthol, et le limonène en solution aqueuse à 30°C.

**Tableau 2**

| **COVs** | **H_{cc}** |
|---|---|
| Toluène | 0,277 |
| Dichlorométhane | 0,133 |
| Acétaldéhyde | 0,006 |
| Méthyléthylcétone | 0,007 |
| *tert*-Butylcyclohexane | 1,383 |
| 1-Décène | 1,130 |
| Anéthol | 0,031 |
| Limonène | 1,230 |
| Heptane | 41,9 |

Concernant le toluène, les constantes de Henry déterminées pour les DESs à base de TBP et de N₄₄₄₄Br sont du même ordre de grandeur que celles obtenues dans les liquides ioniques et les huiles de silicone.

Les résultats (valeur de constantes de Henry (H_{cc}) et pourcentages de COVs absorbés) pour des gammes de concentration de COVs initiales données, et à des températures fixées à 30°C et/ou 60°C, et ce pour différents couples DES/COV figurent dans les tableaux 3 et 4 suivants.

**Tableau 3**

| **COV** | **DES** | **Température (en °C)** | **Gamme de concentration de COV initial testée (en g.m⁻³)** | **Valeurs de la H_{cc}** | **% absorbé** |
|---|---|---|---|---|---|
| | ChCl : U | 30 | 59 - 88 | 0,046 - 0,067 | 74 - 81 |
| | | 60 | 5,9 | 0,18 | 54 |
| | ChCl: G | 30 | 59 - 235 | 0,022 - 0,042 | 81 - 89 |
| Toluène | | 60 | 59 | 0,19 | 53 |
| | ChCl : EG | 30 | 59 - 235 | 0,022- 0,028 | 87 - 90 |
| | ChCl : Lev | 30 | 59 - 590 | 0,0026 - 0,0046 | 98 - 99 |
| | | 60 | 59 | 0,026 | 89 |
| | TBP : G | 30 | 59 - 590 | 0,0021 - 0,0049 | 98 - 99 |
| | | 60 | 59 | 0,0049 | 98 |
| | TBP : Lev | 30 | 59 - 590 | 0 - 0,0015 | 99 - 100 |
| | | 60 | 59 | 0,0048 | 98 |
| | N₄₄₄₄Br : Dec | 30 | 59 - 590 | 0 - 0,0008 | 100 |
| | | 60 | 59 | 0,001 | 100 |
| | ChCl : U | 30 | 59 - 590 | 0,044 - 0,077 | 71 - 83 |
| | | 60 | 5,9 - 59 | 0,12 - 0,23 | 45 - 62 |
| | ChCl: G | 30 | 59 - 1176 | 0,030 - 0,051 | 77 - 87 |
| | | 60 | 5,9 - 59 | 0,13 - 0,16 | 55 - 62 |
| | ChCl : EG | 30 | 59 - 1176 | 0,028 - 0,059 | 76 - 87 |
| | ChCl : Lev | 30 | 59 - 590 | 0,0073 - 0,0090 | 96 |
| Dichlorométhane | | 60 | 5,9 - 59 | 0,021 - 0,028 | 88 - 90 |
| | TBP : G | 30 | 59 | 0,0053 | 99 |
| | | 60 | 59 | 0,0059 | 99 |
| | TBP : Lev | 30 | 59 | 0,0049 | 98 |
| | | 60 | 5,9 - 59 | 0 - 0,0002 | 100 |
| | N₄₄₄₄Br : Dec | 30 | 59 - 590 | 0,003 - 0,004 | 99 |
| | | 60 | 5,9 - 59 | 0 - 0,008 | 97 - 100 |
| | ChCl : U | 30 | 59 - 1176 | 0,0002 - 0,0007 | 99,8 |
| | | 60 | 59 - 590 | 0,0003 - 0,0049 | 97,6 - 99,8 |
| | ChCl: G | 30 | 59 - 1176 | 0,0057 - 0,0064 | 97 |
| Acétaldéhyde | | 60 | 59 - 590 | 0,0006 - 0,001 | 99 |
| | ChCl : EG | 30 | 59 | 0,0047 | 97,6 |
| | ChCl : Lev | 30 | 59 - 590 | 0,0077 - 0,0091 | 96 |
| | | 60 | 59 | 0,059 | 81 |
| | TBP : G | 30 | 59 - 590 | 0,0002 - 0,0006 | 99 - 100 |
| | | 60 | 59 - 590 | 0,0001 - 0,0003 | 99 - 100 |
| | TBP : Lev | 30 | 59 - 590 | 0,0097 - 0,011 | 95 |
| | | 60 | 59 - 590 | 0,035 - 0,044 | 82 - 85 |
| | N₄₄₄₄Br : Dec | 30 | 59 - 590 | 0,016 - 0,018 | 93 |
| | | 60 | 59 | 0,058 | 80 |
| Méthyléthylcétone (MEK) | ChCl : U | 30 | 29 - 235 | 0,0441 - 0,0556 | 79 - 82 |
| | ChCl : EG | 30 | 29 - 402 | 0,0180 - 0,0269 | 88 - 92 |
| | ChCl: G | 30 | 29 - 470 | 0,0288 - 0,0425 | 82 - 88 |
| | ChCl : Lev | 30 | 29 - 1179 | 0,0072- 0,0083 | 96 |
| | TBP : EG | 30 | 29 - 1352 | 0,0035 - 0,0039 | 98 |
| *Tert-*Butylcyclohexane | ChCl : Lev | 30 | 29 - 343 | 0,0431 - 0,0439 | 83 - 84 |
| | TBP- : EG | 30 | 29 - 470 | 0 - 0,00052 | 100 |
| 1-Décène | ChCl : EG | 30 | 2,9 - 35 | 0,1328 - 0,6028 | 60 |
| | ChCl: G | 30 | 2,9 - 5,8 | 0,1667 - 0,7032 | 25 - 55 |
| | ChCl : Lev | 30 | 2,9 - 88 | 0 - 0,0455 | 82 |
| | TBP : EG | 30 | 29 - 588 | 0 - 0,0007 | 100 |
| Anéthol | ChCl : U | 30 | 29 - 588 | 0,0007 - 0,0012 | 100 |
| | ChCl : EG | 30 | 29 - 588 | 0,0003 - 0,0015 | 100 |
| | ChCl: G | 30 | 29 - 588 | 0,0014 - 0,003 | 100 |
| | ChCl : Lev | 30 | 29 - 588 | 0,0001 - 0,00021 | 100 |
| Limonène | ChCl : Lev | 30 | 59 - 588 | 0 - 0,0205 | 89 - 100 |
| | TBP : EG | 30 | 59 - 470 | 0 - 0,0011 | 100 |

**Tableau 4**

| **COV** | **DES** | **Température (en °C)** | **Gamme de concentration de COV initial testée (en g.m⁻³)** | **Valeurs de la H_{cc}** | **% absorbé** |
|---|---|---|---|---|---|
| Toluene | TBP : Lev | 30 | 59 - 2065 | 0.0008 - 0.0011 | 99.5 - 99.9 |
| | N₄₄₄₄Br : Dec | 30 | 59 - 3540 | 0.0005- 0009 | 99.6 - 99.8 |
| | TBP : EG | 30 | 59-2950 | 0.0015-0.021 | 99.2-99.9 |
| | TBP : Xylose | 30 | 29.5-590 | 0.001-0.003 | 98.5-99.2 |
| | N₈₈₈₈Br : Dec | 30 | 59-295 | 0.0006-0.0008 | 99.6-99.7 |
| Dichlorométhane | ChCl: U | 30 | 59 - 5900 | 0.0046 - 0.0056 | 97.7 - 98.1 |
| | TBP : Lev | 30 | 59-4130 | 0.005 - 0.006 | 96.8-97.6 |
| | ChCl: Ox. Ac | 30 | 29.5-590 | 0.07-0.12 | 60.4-72.5 |
| | ChCl : Van | 30 | 59-590 | 0.001-0.01 | 94.6-99.4 |
| | ChCl : EG | 60 | 59-590 | 0.009-0.01 | 95.2-95.6 |
| | TBP : EG | 30 | 590-5900 | 0.0032-0.0048 | 98-98.5 |
| | TBP : Lev | 30 | 295-4130 | 0.005-0.006 | 97.1-97.6 |
| Acétaldéhyde | ChCl : U | 30 | 59 - 8260 | 0.00005 - 0.0001 | 99.9 |
| | ChCl : EG | 30 | 29.5-472 | 0.0001 | 99.9 |
| | ChCl : Lev | 60 | 59-295 | 0.0007-0.0008 | 99.6 |
| | TBP : Lev | 30 | 59 -2360 | 0.0001 - 0.0002 | 99.9 |
| | N₄₄₄₄Br : Dec | 30 | 59-1180 | 0.0003 - 0.0004 | 99.8 |
| | | 60 | 59-295 | 0.0010-0.0011 | 99.5 |
| | ChCl: Ox. Ac | 30 | 29.5-295 | 0.002-0.01 | 94.1-98.9 |
| | ChCl : Van | 30 | 59 | 0.0006 | 99.6 |
| | TBP : EG | 30 | 295-3540 | 0.00005-0.00017 | 99.92-99.97 |
| | TBP: Prop. Ac | 30 | 29.5-590 | 0.0002-0.0008 | 99.6-99.8 |
| Méthyléthylcétone (MEK) | ChCl : Van | 30 | 59-590 | 0.09-0.1 | 52.9-67.1 |
| | TBP : Lev | 30 | 295-3540 | 0.003-0.004 | 98.1-98.4 |
| | TBP: Prop. Ac | 30 | 29.5-590 | 0.004-0.016 | 94.3-97.7 |
| | TBP : Xylitol | 30 | 59-590 | 0.00061-0.00068 | 99.6-99.7 |
| | TBP : Xylose | 30 | 29.5-590 | 0.005-0.006 | 96.5-97.4 |
| | N₄₄₄₄Br : Dec | 30 | 295-3540 | 0.0036-0.0040 | 98.4-98.5 |
| 1-Décène | TBP : Lev | 30 | 29.5-885 | 0.0014-0.0016 | 99.2-99.5 |
| | TBP : Xylitol | 30 | 59-472 | 0.004-0.007 | 96.3-97.9 |
| | TBP : Xylose | 30 | 29.5-295 | 0.006-0.01 | 94.9-96.9 |
| | N₄₄₄₄Br : Dec | 30 | 59-4720 | 0.00017-0.0013 | 99.5-99.9 |
| Heptane | TBP : EG | 30 | 59-147.5 | 0.042-0.053 | 81.9-82.3 |
| | TBP : Lev | 30 | 59-147.5 | 0.04-0.06 | 78.1-82.7 |
| | TBP: Prop. Ac | 30 | 59-295 | 0.014-0.015 | 93.1-93.3 |
| | TBP : Xylitol | 30 | 59 | 0.064 | 74.6 |
| | N₄₄₄₄Br : Dec | 30 | 59-885 | 0.0051-0.0057 | 97.7-97.9 |

Sur le plan quantitatif, les inventeurs ont observé que la capacité d'absorption des DESs suivants :
- ChCl : U, ChCl : G, ChCl : EG, ou
- TBP : EG ou TBP : G
était d'au moins 0,2 mg pour le toluène, 0,2 mg pour le dichlorométhane et de 0,3 mg pour l'acétaldéhyde par gramme de DESs à 30°C et pour une concentration de COVs initiale de 59 g.m⁻³ à 30°C.

La quantité de COV absorbée par gramme de DES est calculée à partir de la droite d'étalonnage du COV dans l'eau permettant de relier la concentration en phase gazeuse à l'aire du pic chromatographique grâce à la loi de conservation de masse et la constante de Henry. La quantité de COV introduite dans le flacon étant connue, la quantité piégée dans le DES s'obtient par la différence entre la quantité présente en phase gazeuse et la quantité initiale. Cette valeur est ramenée à 1 g de DES.

Au vu de l'ensemble de ces résultats, il ressort que le pourcentage d'absorption est compris entre 70 % et 99 % de la quantité initiale de COVs ajoutée aux DESs.

Il est donc démontré que les DESs convenant à l'invention peuvent être utilisés tant pour absorber des COVs hydrophobes que des COVs hydrophiles.

Il s'avère, en outre, que les DESs utilisés sont des absorbants efficaces de COVs à 30°C et à 60°C.

De ces résultats, il est également constaté que certains couples polluant/absorbant (COV/DES) sont particulièrement très efficaces dans la mesure où le pourcentage de COV absorbé avoisine voire même est égal à 100%. Il s'agit notamment des couples toluène / TBP : Lev ; toluène / N₄₄₄₄Br : Dec ; dichlorométhane / TBP : Lev ; dichlorométhane / N₄₄₄₄Br : Dec ; acétaldéhyde / TBP : G ; *tert*-butylcyclohexane / TBP : EG ; 1-décène / TBP : EG ; anéthol / ChCl : U ; anéthol / ChCl : EG ; anéthol / ChCl : G ; anéthol / ChCl : Lev ; et limonène / TBP : EG.

Les capacités de piégeage des DESs ont été comparées à celles de quatre liquides ioniques (LI), à savoir 1-butyl-1-méthylpyrrolidinium dicyanamide, 1-butyl-3-méthylimidazolium acétate, 1-butyl-3-méthylimidazolium bis(trifluorométhyl sulfonyl)imide et 1-butyl-1-méthylpyrrolidinium (trifluorométhyl sulfonyl)imide.

Le tableau 5 récapitule les valeurs de H_{cc} et de pourcentage de COV (toluène et dichlorométhane) absorbé pour différents couples LI/COV à 30°C.

**Tableau 5**

| **COV** | **Liquide Ionique** | **concentration de COV initial testée en g.m⁻³** | **Valeurs de la H_{cc}** | **% absorbé** |
|---|---|---|---|---|
| **Toluène** | 1-butyl-1-méthylpyrrolidinium dicvanamide | 59 | 0,0027 | 98 |
| | 1-butyl-3-méthylimidazolium acétate | 59 | 0,0017 | 99 |
| | 1-butyl-3-méthylimidazolium bis(trifluorométhyl sulfonyl)imide | 59 | 0,0007 | 99 |
| | 1-butyl-1-méthylpyrrolidinium (trifluorométhyl sulfonvl)imide | 59 | 0,0007 | 99 |
| **Dichlorométhane** | 1-butyl-1-méthylpyrrolidinium dicyanamide | 59 | 0,0047 | 98 |
| | 1-butyl-3-méthylimidazolium acétate | 59 | 0,0069 | 96 |
| | 1-butyl-3-méthylimidazolium bis(trifluorométhyl sulfonyl)imide | 59 | 0,015 | 91 |
| | 1-butyl-1-méthylpyrrolidinium (trifluorométhyl sulfonyl)imide | 59 | 0,013 | 92 |

De ces résultats, il ressort que les LI 1-butyl-3-méthylimidazolium bis(trifluorométhyl sulfonyl)imide et 1-butyl-1-méthylpyrrolidinium (trifluorométhyl sulfonyl)imide présentent de bonnes capacités pour le toluène.

Cependant, parmi les LI testés les 1-butyl-3-methylimidazolium bis(trifluoromethylsulfonyl)imide, 1-butyl-1-méthylpyrrolidinium dicyanamide et 1-butyl-3-methylimidazolium bis(trifluoromethylsulfonyl)imide sont classés comme toxiques et le 1-butyl-1-methylpyrrolidinium bis(trifluoromethylsulfonyl)imide comme irritant.

En conséquence, bien que pour certains, les capacités d'absorptions soient du même ordre de grandeur que pour les DESs convenant à l'invention, leur application en tant que solvants de lavage n'est pas envisageable du fait de leur toxicité.

Un avantage principal des DESs est donc de combiner de bonnes capacités d'absorption des COVs avec une non-toxicité (origine bio-sourcée) et une facilité de synthèse.

### EXEMPLE 3 : Impact du recyclage de la solution absorbante contenant au moins un DES convenant à l'invention sur la capacité d'absorption

Une solution de ChCl: U, préparée selon l'exemple 1.1, est utilisée, une première fois, pour absorber du toluène dont la concentration initiale est de 59 g.m⁻³ à une température de 30°C conformément au protocole exposé en exemple 2.

Après utilisation, cette solution absorbante est recyclée par chauffage à une température de 60°C pendant 2 jours afin d'éliminer les COVs absorbés.

La solution de ChCl : U recyclée une première fois est ensuite employée une deuxième fois pour absorber du toluène dans les mêmes conditions que précédemment.

Puis, cette solution est à nouveau recyclée par chauffage à une température de 60°C pendant 2 jours.

Enfin, la solution de ChCl : U recyclée une seconde fois est ensuite employée une troisième fois pour absorber du toluène dans les mêmes conditions que précédemment.

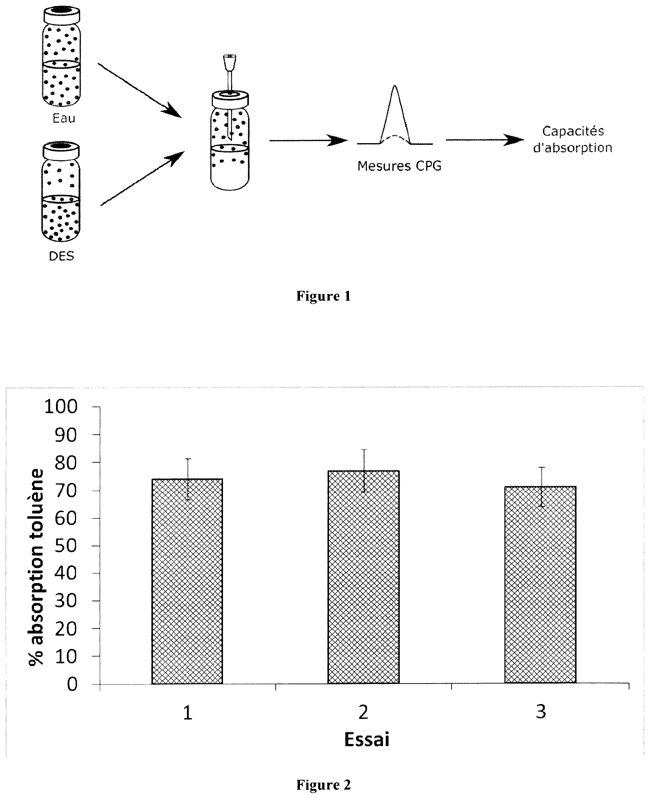

Après comparaison des valeurs du pourcentage de toluène absorbé par cette même solution, il s'avère que la capacité d'absorption n'est aucunement impactée par le recyclage de la solution. Cela est clairement démontré sur la figure 2.

### EXEMPLE 4 : Etude en mode dynamique

Le piégeage des COV en mode dynamique est réalisé en utilisant un montage composé d'un pousse seringue qui délivre une quantité connue de COV au cours du temps, un flacon laveur contenant le DES permettant de mettre en contact le COV et le DES (ce flacon peut être rempli de différents volumes de DES de 10 à 100 mL).

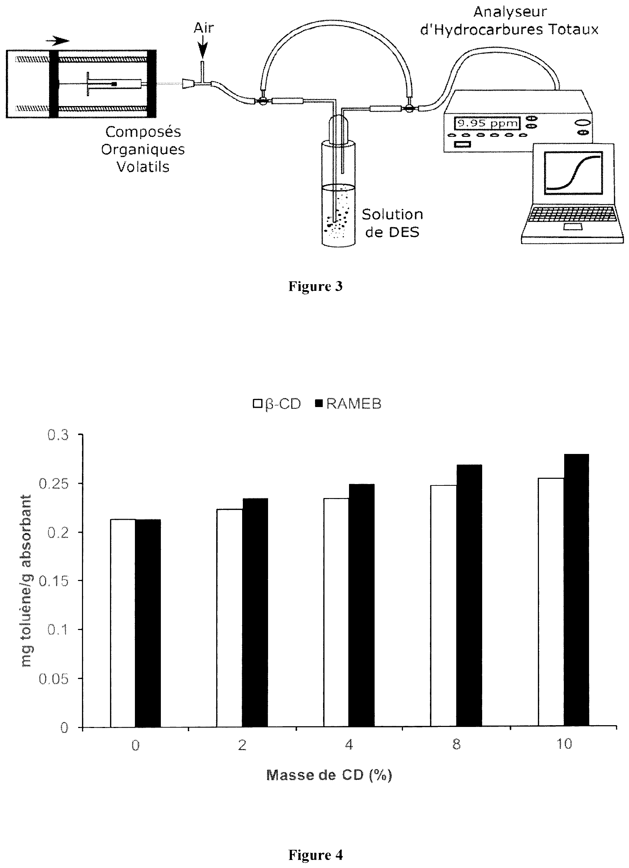

Un tel montage est illustré en figure 3.

La mesure de la concentration en COV est réalisée par un analyseur d'hydrocarbures totaux (AHT). La quantité de COV piégée par la solution de DES est obtenue après désorption du COV par stripping (passage d'air dans le DES).

### EXEMPLE 5 : Effet de l'ajout de cyclodextrines

Deux cyclodextrines, à savoir la β-cyclodextrine et la RAMEB sont, indépendamment l'une de l'autre, ajoutées à différentes teneurs à une solution de ChCl : U déjà préparée selon l'exemple 1.1. L'étude de l'absorption dans ces solutions se fait comme décrit précédemment pour les DESs seuls (c'est-à-dire non associés à des cyclodextrines).

L'effet de cet ajout est illustré dans la figure 4 pour le toluène et une concentration en cyclodextrine de 0% (c'est-à-dire que le DES ChCl : U est « pur » dans le sens où il est seul sans présence de cyclodextrine(s)), 2%, 4%, 8% et 10% en poids.

L'effet de cet ajout est également illustré pour le toluène (figure 6) et pour le décène (figure 7) et une concentration en cyclodextrine, de 0%, 2%, 4%, 6% et 10% en poids, les cyclodextrines étant l'α-CD, la β-CD, la γ-CD, l'HP-β-CD, la CRYSMEB et/ou la RAMEB avec pour DES le ChCl : U. L'aire obtenue est proportionnelle à la concentration du COV dans la phase gazeuse. Une diminution de l'aire correspond donc à une meilleure solubilisation du COV dans le solvant et donc à une plus grande efficacité d'absorption.

Il est constaté que l'ajout de cyclodextrine au ChCl : U permet d'améliorer sa capacité d'absorption. Cet effet peut être relié aux capacités de piégeage des cyclodextrines.

### EXEMPLE 6 : Effet de l'ajout d'eau

Différentes quantités d'eau sont ajoutées aux DESs déjà synthétisés conformément à l'exemple 1 et plus particulièrement ChCl : U, ChCl : G, TBP : G et TBP : EG.

L'étude de l'absorption dans ces solutions se fait comme décrit précédemment pour les DESs seuls.

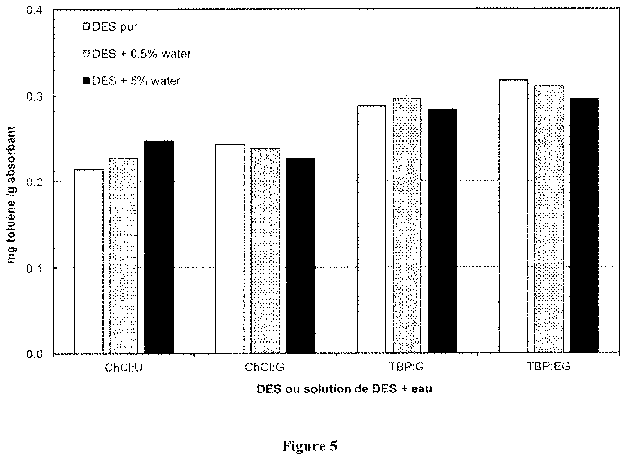

L'effet de cet ajout est illustré dans la figure 5 pour le toluène et des teneurs en eau de 0,5% et 5% en volume.

Il ressort de ces résultats, que la présence de faibles quantités d'eau ne semble pas impacter les capacités d'absorption des DESs.

Ainsi, la présence d'humidité dans l'effluent gazeux n'a pas de conséquence sur le procédé d'absorption.

## Revendications

1. Procédé d'épuration d'un effluent gazeux contenant au moins un composé organique volatil (COV), ledit procédé comprenant au moins les étapes consistant à :
(a) disposer d'au moins un solvant eutectique profond (DES) comprenant :
(aa) au moins un composé de formule (I) R₁R₂R₃R₄Y⁺X⁻
dans laquelle
- Y est un atome d'azote ou un atome de phosphore ;
- R₁, R₂, R₃ et R₄ sont indépendamment les uns des autres choisis parmi un atome d'hydrogène, un alkyle en C₁ à C₁₈ linéaire ou ramifié, un alcoxy en C₁ à C₁₀ linéaire ou ramifié, un cycloalkyle en C₃ à C₁₀, un aryle en C₆ à C₁₀ ou un aralkyle en C₇ à C₁₂ linéaire ou ramifié, lesdits alkyle, alcoxy, cycloalkyle, aryle et aralkyle pouvant être substitués par un ou plusieurs substituents choisis parmi un groupe hydroxyle, un atome d'halogène, un groupe acyle en C₂ à C₁₀, un groupe SR₅, un groupe NH₂, un groupe CN, un groupe NO₂, un groupe CO₂R₅, un groupe CHO, un groupe COR₅ et un groupe OR₅, où R₅ est choisi parmi un groupe alkyle en C₁ à C₁₈ et un groupe cycloalkyle en C₃ à C₁₀ ; et
- X est un atome d'halogène ; et
(bb) au moins un composé (II) qui est un donneur de liaison hydrogène capable de former un complexe avec X⁻ ; et
(b) mettre en contact ledit solvant eutectique profond de l'étape (a) avec ledit effluent gazeux à épurer dans des conditions propices à l'absorption dudit COV par ledit DES,
dans lequel le composé organique volatil est choisi parmi :
- l'éthane, le propane, le pentane, le butane, l'isopentane, l'hexane, et le *tert-*butylcyclohexane ;
- des alcènes, en particulier l'éthylène, le propylène, le 1-décène, et le limonène ;
- des arènes, en particulier le benzène, le toluène, le xylène, l'éthylbenzène, le styrène, et l'anéthol ;
- les aldéhydes, en particulier le formaldéhyde, et l'acétaldéhyde ;
- des cétones, en particulier la méthyléthylcétone et la méthylisobutylcétone ;
- des esters, en particulier l'acétate de méthyle, l'acétate d'éthyle, l'acétate de propyle, et l'acétate de butyle ;
- des composés organiques volatils chlorés, en particulier le dichlorométhane, le trichlorométhane, le tétrachlorométhane, le trichloroéthylène, le tétrachloroéthylène et le chlorure de vinyle ;
- des composés organiques volatils soufrés, en particulier les mercaptans et les alkylsulfures, plus particulièrement le diméthylsulfure, le diméthyldisulfure, et le diéthylsulfure ;
- et leurs mélanges.

2. Procédé selon la revendication 1, dans lequel X est un atome de chlore, de brome, de fluor, ou d'iode, de préférence un atome de chlore ou de brome,
et/ou
dans lequel R₁, R₂, R₃ et R₄ sont indépendamment les uns des autres choisis parmi un alkyle en C₁ à C₁₈ linéaire ou ramifié éventuellement substitué par un groupe hydroxyle, de préférence choisis parmi un alkyle en C₁ à C₄ linéaire éventuellement substitué par un groupe hydroxyle.

3. Procédé selon l'une quelconque des revendications précédentes, dans lequel le composé de formule (I) est choisi parmi le chlorure de choline, le bromure de tétrabutylphosphonium, le bromure de tétrabutylammonium, et leurs mélanges.

4. Procédé selon l'une quelconque des revendications précédentes, dans lequel ledit composé (II) est choisi parmi l'acide lévulinique, l'urée, l'éthylène glycol, le glycérol, l'acide décanoïque, un alkylène glycol, l'acide malonique, la thiourée, la N-méthylurée, N,N'-diméthylurée, N,N-diméthylurée, l'acétamide, le benzamide, le 2,2,2-trifluoroacétamide, l'imidazole, l'acide adipique, l'acide benzoïque, l'alcool benzylique, l'acide citrique, le phénol, le *p*-méthylphénol, l'*o*-méthylphénol, le *m*-méthylphénol, le *p*-chlorophénol, le D-fructose, la vanilline, l'acide oxalique, l'acide oxalique dihydraté, l'aniline, l'acide phénylacétique, l'acide 3-phénylpropionique, l'acide succinique, l'acide tricarballylique, l'acide itaconique, le xylitol, le D-sorbitol, le L-(+)-acide tartrique, le D-isosorbide, l'acide 4-hydroxybenzoïque, l'acide caféique, l'acide *p*-coumarique, l'acide trans-cinnamique, l'acide octanedioïque, l'acide gallique, le résorcinol, et leurs mélanges, de préférence choisi parmi l'acide lévulinique, l'urée, l'éthylène glycol, le glycérol, l'acide décanoïque, l'acide oxalique, le xylitol, la vanilline et leurs mélanges.

5. Procédé selon l'une quelconque des revendications précédentes, dans lequel le solvant eutectique profond est choisi parmi le chlorure de choline : urée, le chlorure de choline : glycérol, le chlorure de choline : éthylène glycol, le chlorure de choline : acide lévulinique, le chlorure de choline : acide oxalique, le chlorure de choline : vanilline, le bromure de tétrabutylphosphonium : glycérol, le bromure de tétrabutylphosphonium : acide lévulinique, le bromure de tétrabutylphosphonium : éthylène glycol, , le bromure de tétrabutylphosphonium : xylitol, le bromure de tétrabutylammonium : acide décanoïque, et leurs mélanges, de préférence choisi parmi le chlorure de choline : urée, le chlorure de choline : glycérol, le chlorure de choline : éthylène glycol, le chlorure de choline : acide lévulinique, le bromure de tétrabutylphosphonium : glycérol, le bromure de tétrabutylphosphonium : acide lévulinique, le bromure de tétrabutylphosphonium : éthylène glycol, et le bromure de tétrabutylammonium : acide décanoïque,
et/ou
dans lequel le solvant eutectique profond présente une viscosité inférieure à 5 000 mPa.s, de préférence allant de 10 mPa.s à 1 000 mPa.s mesurée à 30°C.

6. Procédé selon l'une quelconque des revendications précédentes, dans lequel le rapport molaire du composé (I) au composé (II) va de 1 :1 à 1 :12, de préférence de 1 :1 à 1 :6.

7. Procédé selon l'une quelconque des revendications précédentes, dans lequel le composé organique volatil est choisi parmi le toluène, le dichlorométhane, l'acétaldéhyde, la méthyléthylcétone, le *tert*-butylcyclohexane, le 1-décène, le limonène, l'anéthol et leurs mélanges, encore plus préférentiellement parmi le toluène, le dichlorométhane, l'acétaldéhyde, la méthyléthylcétone, le *tert*-butylcyclohexane, le 1-décène, le limonène, et l'anéthol.

8. Procédé selon la revendication 1, dans lequel ledit composé organique volatil et ledit solvant eutectique profond forment un couple COV / DES choisi parmi:
- toluène / TBP : Lev ;
- toluène / N₄₄₄₄Br : Dec ;
- toluène / TBP : G ;
- toluène / ChCl : Lev ;
- toluène / TBP : EG ;
- dichlorométhane / TBP : Lev ;
- dichlorométhane / N₄₄₄₄Br : Dec ;
- dichlorométhane / TBP : G ;
- dichlorométhane / ChCl : U ;
- dichlorométhane / ChCl : Van ;
- dichlorométhane / ChCl : EG ;
- dichlorométhane / TBP : EG ;
- acétaldéhyde / TBP : G ;
- acétaldéhyde / ChCl : U ;
- acétaldéhyde / ChCl : G ;
- acétaldéhyde / ChCl : EG ;
- acétaldéhyde / ChCl : Lev ;
- acétaldéhyde / TBP : Lev ;
- acétaldéhyde / N₄₄₄₄Br : Dec ;
- acétaldéhyde / ChCl : Ox. Ac ;
- acétaldéhyde / ChCl : Van ;
- acétaldéhyde / TBP : EG ;
- méthyléthylcétone / TBP : EG ;
- méthyléthylcétone / ChCl : Lev ;
- méthyléthylcétone / TBP : Lev ;
- méthyléthylcétone / TBP : Xylitol ;
- méthyléthylcétone / N₄₄₄₄Br : Dec ;
- *tert*-butylcyclohexane / TBP : EG ;
- 1-décène / TBP : EG ;
- 1-décène / TBP : Lev ;
- 1-décène / TBP : Xylitol ;
- 1-décène / N₄₄₄₄Br : Dec ;
- Anéthol / ChCl : U ;
- Anéthol / ChCl : EG ;
- Anéthol / ChCl : G ;
- Anéthol / ChCl : Lev ;
- Limonène / ChCl : Lev ; et
- Limonène / TBP : EG ;
de préférence choisi parmi :
- toluène / TBP : Lev ;
- toluène / N₄₄₄₄Br : Dec ;
- dichlorométhane / TBP : Lev ;
- dichlorométhane / N₄₄₄₄Br : Dec ;
- acétaldéhyde / TBP : G ;
- *tert*-butylcyclohexane / TBP : EG ;
- 1-décène / TBP : EG ;
- Anéthol / ChCl : U ;
- Anéthol / ChCl : EG ;
- Anéthol / ChCl : G ;
- Anéthol / ChCl : Lev ; et
- Limonène / TBP : EG.

9. Procédé selon l'une quelconque des revendications précédentes, comprenant en outre consécutivement à l'étape (b), la récupération dudit effluent gazeux appauvri en COVs et de préférence dénué de COVs.

10. Procédé selon l'une quelconque des revendications précédentes **caractérisé en ce qu'**il est mis en œuvre en mode continu, semi-continu ou en batch,
et/ou
**caractérisé en ce qu'**il est mis en œuvre par circulation, de préférence en boucle fermée.

11. Procédé selon l'une quelconque des revendications précédentes, **caractérisé en ce que** l'effluent gazeux à épurer présente un débit compris entre 100 m³/h et 100 000 m³/h, de préférence entre entre 100 m³/h et 10 000 m³/h et une concentration initiale en COVs comprise entre 1 g.m⁻³ et 10 000 g.m⁻³, de préférence entre 2,9 g.m⁻³ et 1180 g.m⁻³.

12. Utilisation d'au moins un solvant eutectique profond tel que défini dans l'une quelconque des revendications 1 à 6 pour absorber au moins un composé organique volatil tel que défini dans l'une quelconque des revendications 1 et 7 contenu dans un effluent gazeux.

13. Composition comprenant au moins un composé organique volatil choisi parmi :
- l'éthane, le propane, le pentane, le butane, l'isopentane, l'hexane, et le *tert-*butylcyclohexane ;
- l'éthylène, le propylène, et le 1-décène ;
- des arènes, en particulier le benzène, le toluène, le xylène, l'éthylbenzène, le styrène, et l'anéthol ;
- les aldéhydes, en particulier le formaldéhyde, et l'acétaldéhyde ;
- des cétones, en particulier la méthyléthylcétone et la méthylisobutylcétone ;
- des esters, en particulier l'acétate de méthyle, l'acétate d'éthyle, l'acétate de propyle, et l'acétate de butyle ;
- des composés organiques volatils chlorés, en particulier le dichlorométhane, le trichlorométhane, le tétrachlorométhane, le trichloroéthylène, le tétrachloroéthylène et le chlorure de vinyle ;
- des composés organiques volatils soufrés, en particulier les mercaptans et les alkylsulfures, plus particulièrement le diméthylsulfure, le diméthyldisulfure, et le diéthylsulfure ;
- et leurs mélanges,
et au moins un solvant eutectique profond tel que défini dans l'une quelconque des revendications 1 à 6,
ladite composition comprenant en outre au moins une cyclodextrine choisie parmi les α-cyclodextrines, les β-cyclodextrines, les γ-cyclodextrines, substituées ou non, et leurs mélanges, de préférence choisie parmi une α-cyclodextrine, une β-cyclodextrine, une γ-cyclodextrine, une HP-β-cyclodextrine, la CRYSMEB, la RAMEB, et leurs mélanges, et encore plus préférentiellement choisie parmi une α-cyclodextrine, une β-cyclodextrine, une γ-cyclodextrine, une HP-β-cyclodextrine, la CRYSMEB et la RAMEB.

14. Composition selon la revendication 13, dans laquelle ledit composé organique volatil y est présent sous une forme absorbée audit solvant eutectique profond.

## Patentansprüche

1. Verfahren zur Reinigung eines gasförmigen Austragsstroms, der mindestens eine flüchtige organische Verbindung (VOC) enthält, wobei das Verfahren mindestens die Schritte umfasst, die aus Folgendem bestehen:
(a) Bereitstellen von mindestens einem stark eutektischen Lösungsmittel (DES), umfassend:
(aa) mindestens eine Verbindung der Formel (I) R₁R₂R₃R₄Y⁺X⁻,
in der
- Y für ein Stickstoffatom oder ein Phosphoratom steht;
- R₁, R₂, R₃ und R₄ unabhängig voneinander aus einem Wasserstoffatom, einem linearen oder verzweigten C₁- bis C₁₈-Alkyl, einem linearen oder verzweigten C₁- bis C₁₀-Alkoxy, einem C₃- bis C₁₀-Cycloalkyl, einem C₆- bis C₁₀-Aryl oder einem linearen oder verzweigten C₇- bis C₁₂-Aralkyl ausgewählt sind, wobei das Alkyl, Alkoxy, Cycloalkyl, Aryl und Aralkyl durch einen oder mehrere Substituenten, die aus einer Hydroxylgruppe, einem Halogenatom, einer C₂- bis C₁₀-Acylgruppe, einer SR₅-Gruppe einer NH₂-Gruppe, einer CN-Gruppe, einer NO₂-Gruppe, einer CO₂R₅-Gruppe, einer CHO-Gruppe, einer COR₅-Gruppe und einer OR₅-Gruppe ausgewählt sind, substituiert sein können, wobei R₅ aus einer C₁- bis C₁₈-Alkylgruppe und einer C₃- bis C₁₀-Cycloalkylgruppe ausgewählt ist; und
- X für ein Halogenatom steht; und
(bb) mindestens eine Verbindung (II), bei der es sich um einen Wasserstoffbrückenbindungsdonator handelt, der mit X⁻ einen Komplex bilden kann; und
(b) Inkontaktbringen des stark eutektischen Lösungsmittels aus Schritt (a) mit dem gasförmigen Austragsstrom zur Reinigung unter Bedingungen, die für die Absorption der VOC durch das DES geeignet sind,
wobei die flüchtige organische Verbindung aus
- Ethan, Propan, Pentan, Butan, Isopentan, Hexan und tert-Butylcyclohexan;
- Alkenen, insbesondere Ethylen, Propylen, 1-Decen und Limonen;
- Arenen, insbesondere Benzol, Toluol, Xylol, Ethylbenzyl, Styrol und Anethol;
- Aldehyden, insbesondere Formaldehyd und Acetaldehyd;
- Ketonen, insbesondere Methylethylketon und Methylisobutylketon;
- Estern, insbesondere Essigsäuremethylester, Essigsäureethylester, Essigsäurepropylester und Essigsäurebutylester;
- chlorhaltigen flüchtigen organischen Verbindungen, insbesondere Dichlormethan, Trichlormethan, Tetrachlormethan, Trifluorethylen, Tetrachlorethylen und Vinylchlorid;
- schwefelhaltigen flüchtigen organischen Verbindungen, insbesondere Mercaptanen und Alkylsulfiden, spezieller Dimethylsulfid, Dimethyldisulfid und Diethylsulfid;
und Mischungen davon
ausgewählt ist.

2. Verfahren nach Anspruch 1, wobei X für ein Chlor-, Brom-, Fluor- oder Iodatom, vorzugsweise ein Chlor- oder Bromatom, steht
und/oder
wobei R₁, R₂, R₃ und R₄ unabhängig voneinander aus einem linearen oder verzweigten C₁- bis C₁₈-Alkyl, das gegebenenfalls durch eine Hydroxylgruppe substituiert ist, ausgewählt sind und vorzugsweise aus einem linearen C₁- bis C₄-Alkyl, das gegebenenfalls durch eine Hydroxylgruppe substituiert ist, ausgewählt sind.

3. Verfahren nach einem der vorhergehenden Ansprüche, wobei die Verbindung der Formel (I) aus Cholinchlorid, Tetrabutylphosphoniumbromid, Tetrabutylammoniumbromid und Mischungen davon ausgewählt ist.

4. Verfahren nach einem der vorhergehenden Ansprüche, wobei die Verbindung der Formel (II) aus Lävulinsäure, Harnstoff, Ethylenglykol, Glycerin, Decansäure, einem Alkylenglykol, Malonsäure, Thioharnstoff, N-Methylharnstoff, N,N'-Dimethylharnstoff, N,N-Dimethylharnstoff, Acetamid, Benzamid, 2,2,2-Trifluoracetamid, I Imidazol, Adipinsäure, Benzoesäure, Benzylalkohol, Citronensäure, Phenol, *p*-Methylphenol, *o-*Methylphenol, *m*-Methylphenol, *p*-Chlorphenol, D-Fructose, Vanillin, Oxalsäure, Oxalsäuredihydrat, Anilin, Phenylessigsäure, 3-Phenylpropionsäure, Bernsteinsäure, Tricarballylsäure, Itaconsäure, Xylitol, D-Sorbitol, L-(+)-Weinsäure, D-Isosorbid,
4-Hydroxybenzoesäure, Coffeinsäure, *p*-Cumarinsäure, trans-Zimtsäure, Octandisäure, Gallussäure, Resorcinol und Mischungen davon ausgewählt ist und vorzugsweise aus Lävulinsäure, Harnstoff, Ethylenglykol, Glycerin, Decansäure, Oxalsäure, Xylitol, Valin und Mischungen davon ausgewählt ist.

5. Verfahren nach einem der vorhergehenden Ansprüche, wobei das stark eutektische Lösungsmittel aus Cholinchlorid : Harnstoff, Cholinchlorid : Glycerin, Cholinchlorid : Ethylenglykol, Cholinchlorid : Lävulinsäure, Cholinchlorid : Oxalsäure, Cholinchlorid : Vanillin, Tetrabutylphosphoniumbromid : Glycerin, Tetrabutylphosphoniumbromid : Lävulinsäure, Tetrabutylphosphoniumbromid : Ethylenglykol, Tetrabutylphosphoniumbromid : Xylitol, Tetrabutylphosphoniumbromid : Decansäure und Mischungen davon ausgewählt ist und vorzugsweise aus Cholinchlorid : Harnstoff, Cholinchlorid : Glycerin, Cholinchlorid : Ethylenglykol, Cholinchlorid : Lävulinsäure, Tetrabutylphosphoniumbromid : Glycerin, Tetrabutylphosphoniumbromid : Lävulinsäure, Tetrabutylphosphoniumbromid : Ethylenglykol und Tetrabutylphosphoniumbromid : Decansäure ausgewählt ist und/oder
wobei das stark eutektische Lösungsmittel eine bei 30 °C gemessene Viskosität von weniger als 5000 mPa.s, vorzugsweise im Bereich von 10 mPa.s bis 1000 mPa.s, aufweist.

6. Verfahren nach einem der vorhergehenden Ansprüche, wobei das Molverhältnis von Verbindung (I) zu Verbindung (II) im Bereich von 1:1 bis 1:12, vorzugsweise von 1:1 bis 1:6, liegt.

7. Verfahren nach einem der vorhergehenden Ansprüche, wobei die flüchtige organische Verbindung aus Toluol, Dichlormethan, Acetaldehyd, Methylethylketon, tert-Butylcyclohexan, 1-Decen, Limonen, Anethol und Mischungen davon ausgewählt ist und noch weiter bevorzugt aus Toluol, Dichlormethan, Acetaldehyd, Methylethylketon, tert-Butylcyclohexan, 1-Decen, Limonen und Anethol ausgewählt ist.

8. Verfahren nach Anspruch 1, wobei die flüchtige organische Verbindung und das stark eutektische Lösungsmittel ein VOC/DES-Paar bilden, das aus
- Toluol / TBP : Lev;
- Toluol / N₄₄₄₄Br : Dec;
- Toluol / TBP : G;
- Toluol / ChCl : Lev;
- Toluol / TBP : EG;
- Dichlormethan / TBP : Lev;
- Dichlormethan / N₄₄₄₄Br : Dec;
- Dichlormethan / TBP : G;
- Dichlormethan / ChCl : U;
- Dichlormethan / ChCl : Van;
- Dichlormethan / ChCl : EG;
- Dichlormethan / TBP : EG;
- Acetaldehyd / TBP : G;
- Acetaldehyd / ChCl : U;
- Acetaldehyd / ChCl : G;
- Acetaldehyd / ChCl : EG;
- Acetaldehyd / ChCl : Lev;
- Acetaldehyd / TBP : Lev;
- Acetaldehyd / N₄₄₄₄Br : Dec;
- Acetaldehyd / ChCl : Ox. Ac;
- Acetaldehyd / ChCl : Van;
- Acetaldehyd / TBP : EG;
- Methylethylketon / TBP : EG;
- Methylethylketon / ChCl : Lev;
- Methylethylketon / TBP : Lev;
- Methylethylketon / TBP : Xylitol;
- Methylethylketon / N₄₄₄₄Br : Dec;
- tert-Butylcyclohexan / TBP : EG;
- 1-Decen / TBP : EG;
- 1-Decen / TBP : Lev;
- 1-Decen / TBP : Xylitol;
- 1-Decen / N₄₄₄₄Br : Dec;
- Anethol / ChCl : U;
- Anethol / ChCl : EG;
- Anethol / ChCl : G;
- Anethol / ChCl : Lev;
- Limonen / ChCl : Lev und
- Limonen / TBP : EG
ausgewählt ist und vorzugsweise aus
- Toluol / TBP : Lev;
- Toluol / N₄₄₄₄Br : Dec;
- Dichlormethan / TBP : Lev;
- Dichlormethan / N₄₄₄₄Br : Dec;
- Acetaldehyd / TBP : G;
- tert-Butylcyclohexan / TBP : EG;
- 1-Decen / TBP : EG;
- Anethol / ChCl : U;
- Anethol / ChCl : EG;
- Anethol / ChCl : G;
- Anethol / ChCl : Lev und
- Limonen / TBP : EG
ausgewählt ist.

9. Verfahren nach einem der vorhergehenden Ansprüche, das außerdem nach Schritt (b) die Rückgewinnung des an VOC verarmten und vorzugsweise VOC-freien gasförmigen Austragsstroms umfasst.

10. Verfahren nach einem der vorhergehenden Ansprüche, **dadurch gekennzeichnet, dass** es kontinuierlich, halb kontinuierlich oder diskontinuierlich durchgeführt wird,
und/oder
**dadurch gekennzeichnet, dass** es durch Zirkulation, vorzugsweise in einer geschlossenen Schleife, durchgeführt wird.

11. Verfahren nach einem der vorhergehenden Ansprüche, **dadurch gekennzeichnet, dass** der zu reinigende Gasstrom eine Durchflussrate zwischen 100 m³/h und 100.000 m³/h, vorzugsweise zwischen 100 m³/h und 10.000 m³/h, und eine VOC-Anfangskonzentration zwischen 1 g.m⁻³ und 10.000 g.m⁻³, vorzugsweise zwischen 2,9 g.m⁻³ und 1180 g.m⁻³, aufweist.

12. Verwendung mindestens eines stark eutektischen Lösungsmittels gemäß einem der Ansprüche 1 bis 6 zum Absorbieren mindestens einer in einem gasförmigen Austragsstrom enthaltenen flüchtigen organischen Verbindung gemäß einem der Ansprüche 1 bis 7.

13. Zusammensetzung, umfassend mindestens eine flüchtige organische Verbindung, die aus
- Ethan, Propan, Pentan, Butan, Isopentan, Hexan und tert-Butylcyclohexan;
- Ethylen, Propylen und 1-Decen;
- Arenen, insbesondere Benzol, Toluol, Xylol, Ethylbenzyl, Styrol und Anethol;
- Aldehyden, insbesondere Formaldehyd und Acetaldehyd;
- Ketonen, insbesondere Methylethylketon und Methylisobutylketon;
- Estern, insbesondere Essigsäuremethylester, Essigsäureethylester, Essigsäurepropylester und Essigsäurebutylester;
- chlorhaltigen flüchtigen organischen Verbindungen, insbesondere Dichlormethan, Trichlormethan, Tetrachlormethan, Trifluorethylen, Tetrachlorethylen und Vinylchlorid;
- schwefelhaltigen flüchtigen organischen Verbindungen, insbesondere Mercaptanen und Alkylsulfiden, spezieller Dimethylsulfid, Dimethyldisulfid und Diethylsulfid;
- und Mischungen davon
ausgewählt ist,
und mindestens ein stark eutektisches Lösungsmittel gemäß einem der Ansprüche 1 bis 6,
wobei die Zusammensetzung außerdem mindestens ein Cyclodextrin umfasst, das aus substituierten oder unsubstituierten α-Cyclodextrinen, β-Cyclodextrinen, γ-Cyclodextrinen und Mischungen davon ausgewählt sind, vorzugsweise aus einem α-Cyclodextrin, einem β-Cyclodextrin, einem γ-Cyclodextrin, einem HP-β-Cyclodextrin, CRYSMEB, RAMEB und Mischungen davon ausgewählt ist und noch weiter bevorzugt aus einem α-Cyclodextrin, einem β-Cyclodextrin, einem γ-Cyclodextrin, einem HP-β-Cyclodextrin, CRYSMEB und RAMEB ausgewählt ist.

14. Zusammensetzung nach Anspruch 13, wobei die flüchtige organische Verbindung darin in einer an das stark eutektische Lösungsmittel absorbierten Form vorliegt.

## Claims

1. Process for purifying a gaseous effluent containing at least one volatile organic compound (VOC), said process comprising at least the steps consisting in:
(a) providing at least one deep eutectic solvent (DES) comprising:
(aa) at least one compound of formula (I) R₁R₂R₃R₄Y⁺ X⁻
in which
- Y is a nitrogen atom or a phosphorus atom;
- R₁, R₂, R₃ and R₄ are, independently of each other, chosen from a hydrogen atom, a linear or branched C₁ to C₁₈ alkyl, a linear or branched C₁ to C₁₀ alkoxy, a C₃ to C₁₀ cycloalkyl, a C₆ to C₁₀ aryl or a linear or branched C₇ to C₁₂ aralkyl, said alkyl, alkoxy, cycloalkyl, aryl and aralkyl possibly being substituted with one or more substituents chosen from a hydroxyl group, a halogen atom, a C₂ to C₁₀ acyl group, a group SR₅, an NH₂ group, a CN group, an NO₂ group, a group CO₂R₅, a CHO group, a group COR₅ and a group OR₅, in which R₅ is chosen from a C₁ to C₁₈ alkyl group and a C₃ to C₁₀ cycloalkyl group; and
- X is a halogen atom; and
(bb) at least one compound (II) which is a hydrogen-bond donor that is capable of forming a complex with X⁻; and
(b) placing said deep eutectic solvent from step (a) in contact with said gaseous effluent to be purified under conditions that are suitable for the absorption of said VOC by said DES,
in which the volatile organic compound is chosen from:
- ethane, propane, pentane, butane, isopentane, hexane and tert-butylcyclohexane;
- alkenes, in particular ethylene, propylene, 1-decene and limonene;
- arenes, in particular benzene, toluene, xylene, ethylbenzene, styrene and anethole;
- aldehydes, in particular formaldehyde and acetaldehyde;
- ketones, in particular methyl ethyl ketone and methyl isobutyl ketone;
- esters, in particular methyl acetate, ethyl acetate, propyl acetate and butyl acetate;
- chlorinated volatile organic compounds, in particular dichloromethane, trichloromethane, tetrachloromethane, trichloroethylene, tetrachloroethylene and vinyl chloride;
- sulfur-based volatile organic compounds, in particular mercaptans and alkyl sulfides, more particularly dimethyl sulfide, dimethyl disulfide and diethyl sulfide;
- and mixtures thereof.

2. Process according to Claim 1, in which X is a chlorine, bromine, fluorine or iodine atom, preferably a chlorine or bromine atom,
and/or in which R₁, R₂, R₃ and R₄ are, independently of each other, chosen from a linear or branched C₁ to C₁₈ alkyl optionally substituted with a hydroxyl group, preferably chosen from a linear C₁ to C₄ alkyl optionally substituted with a hydroxyl group.

3. Process according to either one of the preceding claims, in which the compound of formula (I) is chosen from choline chloride, tetrabutylphosphonium bromide, tetrabutylammonium bromide, and mixtures thereof.

4. Process according to any one of the preceding claims, in which said compound (II) is chosen from levulinic acid, urea, ethylene glycol, glycerol, decanoic acid, an alkylene glycol, malonic acid, thiourea, N-methylurea, N,N'-dimethylurea, N,N-dimethylurea, acetamide, benzamide, 2,2,2-trifluoroacetamide, imidazole, adipic acid, benzoic acid, benzyl alcohol, citric acid, phenol, p-methylphenol, o-methylphenol, *m*-methylphenol, p-chlorophenol, D-fructose, vanillin, oxalic acid, oxalic acid dihydrate, aniline, phenylacetic acid, 3-phenylpropionic acid, succinic acid, tricarballylic acid, itaconic acid, xylitol, D-sorbitol, L-(+)-tartaric acid, D-isosorbide, 4-hydroxybenzoic acid, caffeic acid, p-coumaric acid, trans-cinnamic acid, octanedioic acid, gallic acid, resorcinol, and mixtures thereof, preferably chosen from levulinic acid, urea, ethylene glycol, glycerol, decanoic acid, oxalic acid, xylitol, vanillin, and mixtures thereof.

5. Process according to any one of the preceding claims, in which the deep eutectic solvent is chosen from choline chloride: urea, choline chloride: glycerol, choline chloride: ethylene glycol, choline chloride: levulinic acid, choline chloride: oxalic acid, choline chloride: vanillin, tetrabutylphosphonium bromide: glycerol, tetrabutylphosphonium bromide: levulinic acid, tetrabutylphosphonium bromide: ethylene glycol, tetrabutylphosphonium bromide: xylitol, tetrabutylammonium bromide: decanoic acid, and mixtures thereof, preferably chosen from choline chloride: urea, choline chloride: glycerol, choline chloride: ethylene glycol, choline chloride: levulinic acid, tetrabutylphosphonium bromide: glycerol, tetrabutylphosphonium bromide: levulinic acid, tetrabutylphosphonium bromide: ethylene glycol, and tetrabutylammonium bromide: decanoic acid, and/or in which the deep eutectic solvent has a viscosity of less than 5000 mPa.s, preferably ranging from 10 mPa.s to 1000 mPa.s measured at 30°C.

6. Process according to any one of the preceding claims, in which the mole ratio of compound (I) to compound (II) ranges from 1:1 to 1:12, preferably from 1:1 to 1:6.

7. Process according to any one of the preceding claims, in which the volatile organic compound is chosen from toluene, dichloromethane, acetaldehyde, methyl ethyl ketone, tert-butylcyclohexane, 1-decene, limonene, anethole and mixtures thereof, even more preferentially from toluene, dichloromethane, acetaldehyde, methyl ethyl ketone, tert-butylcyclohexane, 1-decene, limonene and anethole.

8. Process according to Claim 1, in which said volatile organic compound and said deep eutectic solvent form a VOC / DES couple chosen from:
- toluene / TBP : Lev ;
- toluene / N₄₄₄₄Br : Dec ;
- toluene / TBP : G ;
- toluene / ChCl : Lev ;
- toluene / TBP : EG ;
- dichloromethane / TBP : Lev ;
- dichloromethane / N₄₄₄₄Br : Dec;
- dichloromethane / TBP : G ;
- dichloromethane / ChCl : U ;
- dichloromethane / ChCl : Van ;
- dichloromethane / ChCl : EG ;
- dichloromethane / TBP : EG ;
- acetaldehyde / TBP : G ;
- acetaldehyde / ChCl : U ;
- acetaldehyde / ChCl : G ;
- acetaldehyde / ChCl : EG ;
- acetaldehyde / ChCl : Lev ;
- acetaldehyde / TBP : Lev ;
- acetaldehyde / N₄₄₄₄Br : Dec ;
- acetaldehyde / ChCl : Ox. Ac ;
- acetaldehyde / ChCl : Van ;
- acetaldehyde / TBP : EG ;
- methyl ethyl ketone / TBP : EG ;
- methyl ethyl ketone / ChCl : Lev ;
- methyl ethyl ketone / TBP : Lev ;
- methyl ethyl ketone / TBP : Xylitol ;
- methyl ethyl ketone / N₄₄₄₄Br : Dec ;
- tert-butylcyclohexane / TBP : EG ;
- 1-decene / TBP : EG ;
- 1-decene / TBP : Lev ;
- 1-decene / TBP : Xylitol ;
- 1-decene / N₄₄₄₄Br : Dec ;
- anethole / ChCl : U ;
- anethole / ChCl : EG ;
- anethole / ChCl : G ;
- anethole / ChCl : Lev ;
- limonene / ChCl : Lev ; and
- limonene / TBP : EG ;
preferably chosen from:
- toluene / TBP : Lev ;
- toluene / N₄₄₄₄Br : Dec ;
- dichloromethane / TBP : Lev ;
- dichloromethane / N₄₄₄₄Br : Dec ;
- acetaldehyde / TBP : G ;
- tert-butylcyclohexane / TBP : EG ;
- 1-decene / TBP : EG ;
- anethole / ChCl : U ;
- anethole / ChCl : EG ;
- anethole / ChCl : G ;
- anethole / ChCl : Lev ; and
- limonene / TBP : EG.

9. Process according to any one of the preceding claims, also comprising, following step (b), the recovery of said gaseous effluent depleted in VOCs and preferably devoid of VOCs.

10. Process according to any one of the preceding claims, **characterized in that** it is performed in continuous, semicontinuous or batch mode and/or **characterized in that** it is performed by circulation, preferably in a closed loop.

11. Process according to any one of the preceding claims, **characterized in that** the gaseous effluent to be purified has a flow rate of between 100 m³/h and 100 000 m³/h, preferably between 100 m³/h and 10 000 m³/h and an initial VOC concentration of between 1 g.m⁻³ and 10 000 g.m⁻³, preferably between 2.9 g.m⁻³ and 1180 g.m⁻³.

12. Use of at least one deep eutectic solvent as defined in any one of Claims 1 to 6 for absorbing at least one volatile organic compound as defined in any one of Claims 1 and 7, contained in a gaseous effluent.

13. Composition comprising at least one volatile organic compound chosen from:
- ethane, propane, pentane, butane, isopentane, hexane and *tert-*butylcyclohexane;
- ethylene, propylene and 1-decene;
- arenes, in particular benzene, toluene, xylene, ethylbenzene, styrene and anethole;
- aldehydes, in particular formaldehyde and acetaldehyde;
- ketones, in particular methyl ethyl ketone and methyl isobutyl ketone;
- esters, in particular methyl acetate, ethyl acetate, propyl acetate and butyl acetate;
- chlorinated volatile organic compounds, in particular dichloromethane, trichloromethane, tetrachloromethane, trichloroethylene, tetrachloroethylene and vinyl chloride;
- sulfur-based volatile organic compounds, in particular mercaptans and alkyl sulfides, more particularly dimethyl sulfide, dimethyl disulfide and diethyl sulfide;
- and mixtures thereof,
and at least one deep eutectic solvent as defined in any one of Claims 1 to 6,
said composition also comprising at least one cyclodextrin chosen from α-cyclodextrins, β-cyclodextrins, γ-cyclodextrins, which may or may not be substituted, and mixtures thereof, preferably chosen from an α-cyclodextrin, a β-cyclodextrin, a γ-cyclodextrin, an HP-β-cyclodextrin, CRYSMEB, RAMEB, and mixtures thereof, and even more preferentially chosen from an α-cyclodextrin, a β-cyclodextrin, a γ-cyclodextrin, an HP-β-cyclodextrin, CRYSMEB and RAMEB.

14. Composition according to Claim 13, in which said volatile organic compound is present therein in a form absorbed into said deep eutectic solvent.
